# EUROPÄISCHE PATENTSCHRIFT

(11) **EP 3 201 280 B1**
(45) Veröffentlichungstag und Bekanntmachung des Hinweises auf die Patenterteilung: **24.05.2023**
(21) Anmeldenummer: 15750334.3
(22) Anmeldetag: 06.08.2015
(51) Int. Cl.: C09D 161/24, C09D 161/28, C09D 161/26, C09D 133/04, C09D 169/00, C09D 167/02, C09D 161/32, C09D 167/08, C08G 12/42

(54) **EINKOMPONENTIGE AMINOHARZBESCHICHTUNGSMASSEN**
ONE-COMPONENT AMINO RESIN COATING COMPOSITION
COMPOSITION DE REVÊTEMENT AMINOPLASTE EN UN COMPOSANT

(30) Priorität: 29.09.2014 EP 14186902
(43) Veröffentlichungstag der Anmeldung: 09.08.2017
(73) Patentinhaber: BASF SE, 67056 Ludwigshafen (DE)
(72) Erfinder: SCHÄFER, Harald, 68219 Mannheim (DE); TÜRP, David, 68163 Mannheim (DE); FLOJHAR, Daniel, 67063 Ludwigshafen (DE)
(74) Vertreter: BASF IP Association
(86) Internationale Anmeldenummer: PCT/EP2015/068125
(87) Internationale Veröffentlichungsnummer: WO 2016/050396

(56) Entgegenhaltungen:
- DE-A1- 19 525 375
- JP-A- 2004 026 940
- US-A- 5 552 184
- US-A1- 2008 138 527
- US-A1- 2011 195 262
- US-A1- 2012 183 796

## Beschreibung

Die vorliegende Erfindung betrifft einkomponentige Aminoharzbeschichtungsmassen mit einer guten Chemikalienbeständigkeit, einem guten Verhältnis von Härte zu Elastizität und schneller Trocknung, deren Verwendung und Verfahren zum Beschichten. Die Beschichtungsmassen enthalten als Aufbaukomponenten Aminoharze, hydroxylgruppenhaltige Polymere als Hauptpolyole und bestimmte verzweigte Polyesterpolyole, erhältlich durch Polykondensation von Hexahydrophthalsäureanhydrid, Trimethylolpropan und optional weiteren Komponenten.

Einkomponentige Aminoharzbeschichtungsmassen sind weit verbreitet beispielsweise zur Lackierung in der Automobilindustrie, für Can- (Gebinde) und Coil- (Bänder) Coating. An derartige Lackierungen werden hohe Anforderungen u.a. betreffend Beständigkeit und Flexibilität gestellt. Für die Verarbeitung bei der Lackierung ist eine schnelle Trocknung essentiell, da diese eine beschleunigte Weiterverarbeitung der lackierten Substrate ermöglicht, respektive Energieeinsparung bei der Trocknung erlaubt.

Einkomponentige Aminoharzbeschichtungsmassen, die als Bindemittel eine Kombination aus u.a. Aminoharz, Polyolen (Polyesterol, Polyetherol, Polyacrylatol) und hyperverzweigten Polyesterolen enthalten, sind bekannt aus US 6646049. Die hyperverzweigten Polyesterole werden in drei Schritten hergestellt: Ein Kern (z.B. Trimethylolpropan) wird in einer ersten Kettenverlängerung mit einer Polyhydroxycarbonsäure (Standard ist Dimethylolpropionsäure) zu einem Polyol umgesetzt, in einer zweiten Kettenverlängerung mit einer Polycarbonsäure(-anhydrid) (beispielsweise Hexahydrophthalsäureanhydrid), (mit Lösungsmittel versetzt), und in einer dritten Kettenverlängerung mit einem Epoxid (z.B. Cardura^{®} E-10-glicidylester) umgesetzt (vgl. Beispiel 1). Der dreischrittige Prozess ist sehr aufwändig. Zudem musste zwischendurch Lösungsmittel zugegeben werden, damit eine ausreichend niedrige Viskosität zurweiteren Umsetzung erreicht wird. Es wurde mit Schwefelsäure als Katalysator gearbeitet, die nach der Herstellung noch frei vorliegt, was sich in einer späteren Lackanwendung in Bezug auf Stabilität des Lacks und Korrosion gegenüber metallischen Untergründen negativ auswirken kann. DieAddukte aus Kernpolyol und Polyhydroxycarbonsäure haben einen sehr hohen Verzweigungsgrad mit einer stark dendritischen Struktur. Die hyperverzweigten Polyesterole haben externe und eingeschlossene (embedded) Hydroxylfunktionen, von denen die eingeschlossenen füreine Reaktion nicht oder nur unzureichend zur Verfügung stehen. Bei der Umsetzung mit dem Epoxid entstehen sekundäre Alkohole, die im Vergleich zu primären Alkoholen eine reduzierte Reaktivität besitzen. Strukturell haben innenliegende und sekundäre Hydroxylgruppen inhärent einen negativen Einfluss auf die Vernetzungsdichte (Chemikalienbeständigkeit) und Härtung. Die WO 01/46296 beschreibt gleichartig aufgebaute hyperverzweigte Polyesterole.

Die WO 08/148555 beschreibt Klarlackzusammensetzungen auf Basis der hyperverzweigten Polyesterpolyole Boltorn^{®} H30 und Boltorn^{®} H20 durch Umsetzung mit C8- und C9-Monocarbonsäuren. Bei den Boltorn^{®}-Typen handelt es sich um Poly(dimethylolpropionsäure) mit einem Trimethylolpropan-Kern, sehr hohen Funktionalitäten von 32 und 16, Hydroxylzahlen von ca. 500 mg KOH/g, und hohen Viskositäten von 40 und 6 Pa*s bei 110 °C. Diese haben für Lackanwendungen sehr hohe Hydroxylzahlen, sind hochpolar und weisen daher eine geringe Kompatibilität mit anderen Lackkomponenten wie Polyisocyanaten und anderen Polyolen auf. Daher werden sie in der WO 08/148555 durch die C8- und C9-Monocarbonsäuren hydrophobiert und die Hydroxylzahlen reduziert. Die Rohstoffbasis der mit C8- und C9-Monocarbonsäuren modifizierten Poly-(dimethylolpropionsäure) ist sehr beschränkt. Die Struktur der Boltorn^{®}-Typen hat einen stark dendritischen Charakter mit einzelnen Verzweigungsschichten und analog der US 6646049 innenliegenden und für die Reaktion im Lack nicht zur Verfügung stehenden Hydroxylgruppen. Die Umsetzung der Boltorn^{®}-Typen mit den Monocarbonsäuren erfolgt wegen der hohen Viskosität der Boltorn^{®}-Typen bei 200 °C (Beispiel 1) in Lösungsmittel, was sicherheitstechnisch nachteilig ist. Die Herstellung der Boltorn^{®}-Typen und der erfindungsgemäßen Polyesterole erfolgt in zwei verschiedenen Anlagen. Die Säurezahlen sind von der Zusammensetzung her nahe Null (<= 6 mg KOH/g).

DE 4204611 beschreibt Überzugsmittel, enthaltend ein oder mehrere Polyesterharze sowie ein oder mehrere Aminoplastharze und/oder blockierte Di- und/oder Polyisocyanate, dadurch gekennzeichnet, dass es 45-85 Gew.-% eines oder mehrerer Polyesterole, die verzweigt aufgebaut und im Wesentlichen frei von aromatischen Struktureinheiten sind, 10-40 Gew.-% eines oder mehrerer Vernetzer auf Basis von Aminoplastharzen und/oder blockierten Di- und/oder Polyisocyanaten, 0-20 Gew.-% eines oder mehrerer Reaktivverdünner, und 0-10 Gew.-% eines oder mehrerer organischer Lösungsmittel enthält. Säurezahlen liegen bevorzugt bei 12-20 mg KOH/g. Die DE 4204611 beschriebt zum Beispiel (Bsp. 1) ein Polyesterol bestehend aus287 g Neopentylglykol, 57 g Ethylenglykol, 134 g Trimethylolpropan, 197 g Adipinsäure und 324 g Hexahydrophthalsäureanhydrid, welche mit 1 g hypophosphoriger Säure als Katalysator bei 170°C bis 250° C umgesetzt werden. Dazu werden bei 70°C 225,5 g Hexamethoxymethylmelamin (HMMM-Aminoharz, voll methyliert) gegeben und mit Lösungsmittel (Texanol^{®}) verdünnt. Dazu werden geringe Mengen Polycaprolactontriols als Reaktivverdünner und weitere verdünnende niedermolekulare Verbindungen (Triethylenglykol sowie Diester aus Phthalsäure und 2-Ethylhexanol), geblockte p-Toluolsulfonsäure als Katalysator und Additive gemischt und zu einem Klarlack gehärtet. Die Umsetzung der Rohstoffe zum verzweigten Polyesterol erfolgt bei hoher Temperatur und unter Katalyse, um die Adipinsäure umzusetzen. Die einzelnen Komponenten werden in-situ gemischt und umgesetzt. Das in 20% bezogen auf das Polyesterol zugegebene trifunktionelle Polycaprolactontriol als Nebenpolyol wird als Reaktivverdünner zur Reduktion des Feststoffanteils eingesetzt. Einen Hinweis auf Verbesserung der Lackeigenschaften gibt es nicht.

In der EP 0705858 werden Polyesterpolyole und ihre Verwendung als Polyolkomponente in Zweikomponenten-Polyurethanlacken beschrieben. Die Polyesterpolyole sind aufgebaut aus Neopentylglykol (5-50 %), Trimethylolpropan (10-45 %) und Hexahydrophthalsäureanhydrid (40-52 %) in einem spezifischen Mischungsverhältnis und haben relativ geringe Säurzahlen von 5 bis 30. Eine potentielle Nutzung der Polyesterpolyole für Einkomponentensysteme wird nicht beschrieben.

Aufgabe der vorliegenden Erfindung war es insbesondere, einkomponentige Aminoharzbeschichtungsmassen zur Verfügung zu stellen, die gegenüber anderen einkomponentigen Beschichtungsmassen eine gute Chemikalienbeständigkeit, ein gutes Verhältnis von Härte zu Elastizität und eine schnelle Trocknung aufweisen.

Die Aufgabe wurde gelöst durch einkomponentige, lösungsmittelhaltige Aminoharzbeschichtungsmassen enthaltend als Aufbaukomponenten
(A) mindestens ein Aminoharz, ausgewählt aus der Gruppe bestehend aus MelaminFormaldehydharz, Benzoguanamin-Formaldehydharz und Harnstoff-Formaldehydharz,
(B) mindestens ein hydroxylgruppenhaltiges Polymer ausgewählt aus der Gruppe bestehend aus Poly(meth)acrylatpolyolen (B1), Polyesterpolyolen (B2), die durch Kondensation von Polycarbonsäuren mit Diolen erhältlich sind, Polyetherolen (B3), Alkydharzen (B4) und Polycarbonatpolyolen (B5),
(C) mindestens ein verzweigtes Polyesterpolyol, erhältlich durch Polykondensation von
   - Hexahydrophthalsäureanhydrid,
   - Trimethylolpropan,
   - optional mindestens eines Diols, wobei das molare Mischungsverhältnis von Hydroxylgruppen des Trimethylpropans zu den Hydroxylgruppen der Summe aller Diole oberhalb von 1:1 liegt,
   - optional mindestens eines weiteren Triols,
   - optional mindestens einer weiteren Di- oder Tri-Säure oder deren Derivaten,

   wobei die Säure- und Hydroxylgruppen der Rohstoffe des Polyesterpolyols in einem molaren Mischungsverhältnis von 1:1 bis 1:1,95, bevorzugt von 1:1,2 bis 1:1,8 eingesetzt werden, und
   im Polyesterpolyol weniger als 20 %, bevorzugt weniger als 10 %, besonders bevorzugt kein Tetraalkohol stöchiometrisch bezogen auf Hexahydrophthalsäureanhydrid eingesetzt wird und
   wobei das Polyesterpolyol nicht aus Dihydroxycarbonsäuren, und vorzugsweise auch nicht aus Polyhydroxycarbonsäuren, insbesondere nicht aus Dimethylolpropionsäure gebildet ist,
(D) optional mindestens einen chemischen Vernetzer, ausgewählt aus der Gruppe bestehend aus blockierten Polyisocyanaten, Trisalkylcarbamoyltriazinen, Epoxidharzen, carboxygruppenhaltigen Harzen und von Aminoharz (A) verschiedenen aminogruppenhaltigen Harzen,
(E) mindestens ein organisches Lösungsmittel,
(F) optional mindestens einen Katalysator,
(G) optional mindestens ein lacktypisches Additiv,
(H) optional mindestens einen Füllstoff, Farbstoff und/oder Pigment,
   wobei das Verhältnis der Komponenten (B) zu (C) größer als 1:1 bezogen auf Feststoff beträgt, und
   wobei das Polyesterpolyol (C) eine Summe von Säurezahl gemäß DIN EN ISO 2114:2000 und Hydroxylzahl gemäß DIN 53240-2:2007-11 von 200 bis 400 mg KOH/g aufweist.

Die erfindungsgemäßen Beschichtungsmassen zeigen gegenüber vergleichbaren einkomponentigen Aminoharzbeschichtungsmassen eine gute Chemikalienbeständigkeit, ein gutes Verhältnis von Härte zu Elastizität und eine schnelle Trocknung.

Erfindungsgemäße einkomponentige Aminoharzbeschichtungsmassen bestehen aus mindestens einem Aminoharz, einem hydroxylgruppenhaltigen Hauptpolymer und einem verzweigten Polyesterpolyol, und gegebenenfalls weiteren Komponenten.

Die Bezeichnung ,,(meth)acryl" und ähnliche Bezeichnungen stehen abkürzend für "acryl oder methacryl".

Bei der Komponente (A) handelt es sich um mindestens ein Aminoharz.

Dabei handelt es sich insbesondere um Melamin-Formaldehyd-Harze, z.B. nicht plastifizierte Melamin-Formaldehyd-Harze. Nichtplastifizierte Melamin-Formaldehyd-Harze dienen entweder allein oder in Kombination mit weiteren chemisch verschiedenen Vernetzern, beispielsweise blockierten Polyisocyanaten, Trisalkylcarbamoyltriazinen (TACT) oder Epoxiden, als vernetzende Komponente in Bindemittelmischungen. Nach Härtung der Lackbestandteile erhält man eine Beschichtung, welche beständig ist gegen chemische, mechanische und witterungsbedingte Einflüsse. Plastifizierte Melamin-Formaldehyd-Harze können Modifizierungen mit Carbamatstrukturen, Abmischungen mit Polyesterolen oder Alkydharzen bzw. Vorkondensationen mit diesen, aufweisen. Nichtplastifizierte Melamin-Formaldehyd-Harze benötigen im Falle der Verwendung auf nicht formstabilen, flexiblen Beschichtungssubstraten vorzugsweise eine äußere Elastifizierung, damit die Beschichtung nicht reißt. Der Vernetzer als alleiniger Formulierungsbestandteil bildet in der Regel lediglich spröde Netzwerke.

Geeignete Melamin-Formaldehyd-Harze lassen sich nach Anwendungsgebieten (z.B. Formmassen, Leime, Tränkharze, Lacke), Veretherungsalkoholen (z.B. Veretherung mit Butanol, Methanol, Mischveretherung) oder wie hier aufgeführt nach dem Verhältnis aus Triazin : Formaldehyd : Veretherungsalkohol charakterisieren:
(1) vollständig bis hoch methylolierte und vollalkylierte bis hochalkylierte Harze (HMMM-Typen)
(2) teilmethylolierte und hochalkylierte Harze (High Imino Typen)
(3) teilmethylolierte und teilalkylierte Harze (Methylol Typen)
(4) niedrig methylolierte Harze (Melamin-Formaldehyd-Kondensate)

Die erste große Gruppe der vollständig bis hoch methylolierten und vollalkylierten bis hochalkylierten (veretherten) Melamin-Formaldehyd-Harze, bei denen das sogenannte Einbaumolverhältnis Melamin:Formaldehyd:Alkohol theoretisch 1:6:6, vorzugsweise 1 : größer 5,5: größer 5,0 und besonders bevorzugt 1 : größer 5,5 : größer 4,5 beträgt, zeichnen sich durch ein ausgesprochen gutes High solids-Verhalten (relativ niedrige Viskosität bei hohem Feststoffgehalt) aus. Bei dieser Vernetzergruppe lässt sich der freie Formaldehyd aufgrund der niedrigen Viskosität des Aminoharzes leicht reduzieren. Erreichbar ist z.B. ein Gehalt an freiem Formaldehyd von kleiner 0,3 Gew%. Dabei enthalten die Handelsprodukte als Alkohol zumeist Methanol, es sind aber auch gemischtveretherte oder vollständig butylierte Typen bekannt. Die veretherten Melamin-Formaldehyd-Harze werden bevorzugt in Beschichtungen von Gebinden (Can-Coating) und Metallbändern (Coil-Coating) und für alle Schichten der Automobillackierung eingesetzt.

Die geringe thermische Reaktivität bei Einbrennbedingungen, wie 20 Minuten bei 140°C, erfordert für diese vollständig veretherten Melamin-Formaldehyd-Harze in der Regel die Katalyse mit starken Säuren. Dadurch erhält man eine sehr schnelle Härtung durch Umetherung mit dem Bindemittel unter Freisetzung der Veretherungsalkohole und ein homogenes Ko-Netzwerk. Mit dieser Katalyse mit starken Säuren sind sehr kurze Aushärtungszeiten, wie bei teilmethylolierten Melamin-Formaldehyd-Harzen möglich. Während der Vernetzung ist eine Formaldehydemission möglich, die deutlich über dem freien Formaldehyd liegt und in der Rückspaltung von Methylolgruppen begründet ist. Säurekatalysierte Systeme für can und coil Anwendungen werden vorzugsweise im Bereich von 10 s bis 10 min bei 170 bis 300 °C eingebrannt.

Die zweite große Gruppe der teilweise veretherten Melamin-Formaldehyd-Harze-haben vorzugsweise ein Einbaumolverhältnis Melamin:Formaldehyd:Alkohol von 1 : 3 bis 5,4: 1,5 bis 4,3 und zeichnen sich durch eine im Vergleich zur ersten Gruppe deutlich erhöhten thermischen Reaktivität ohne Säurekatalyse aus. Während der Produktion dieser Vernetzer findet eine Eigenkondensation statt, die zu einer höheren Viskosität (geringeres High solids-Verhalten) führt und dadurch die Entfernung des freien Formaldehyd bei der Destillation erschwert. Für diese Produkte sind ein Gehalt an freiem Formaldehyd von 0,5 bis 1,5% oder von 0,3 bis 3 Gew% bevorzugt. Auch hier sind als Handelsprodukte methylierte, butylierte sowie gemischt veretherte Typen weit verbreitet. Die Veretherung mit weiteren Alkylierungsstoffen ist in der Literatur beschrieben bzw. als spezielle Produkte erhältlich.

High-Imino-Typen und Methylol-Typen als jeweilige Untergruppe weisen beide eine unvollständige Methylolierung, d.h. Formaldehyd-Einbaumolverhältnisse von weniger als 1 : 5,5, auf. Die High-Imino-Typen unterscheiden sich von den Methylol-Typen jedoch durch einen hohen Alkylierungsgrad, d.h. dem Anteil der veretherten Methylolgruppen an den eingebauten Formalde- hyd-Äquivalenten, von meist bis zu 80 %, wohingegen die Methylol-Typen in der Regel einen Alkylierungsgrad von kleiner 70 % aufweisen.

Einsatzgebiete für die teilmethylolierten Melamin-Formaldehyd-Harze erstrecken sich über alle Anwendungsbereiche, auch in Kombination mit HMMM Typen zur Reaktivitätsanpassung, wo Härtungstemperaturen von ca. 100 bis 150°C gefordert sind. Eine zusätzliche Katalyse mit Hilfe schwacher Säuren ist möglich. Neben der Reaktion des Aminoharzes mit dem Bindemittel findet ein deutlich erhöhter Anteil an Eigenvernetzung des Vernetzers mit sich selbst statt. Die Folge ist eine reduzierte Elastizität des Gesamtsystems, welche durch die geeignete Auswahl des Kombinationspartners ausgeglichen werden kann. Vorteilhaft ist die reduzierte Gesamtformaldehydemission aus den daraus hergestellten Beschichtungen.

Neben Aminoharzen, insbesondere Melamin-Formaldehyd-Harzen, mit nur einem Veretherungsalkohol können auch gemischtveretherte Produkte eingesetzt werden. Dabei wird ein Melamin-Formaldehyd-Harz mit mehr als einem Alkohol verethert, z.B. ausgewählt aus Methanol, Ethanol, n-Butanol, iso-Butanol und/ oder 2-Ethyl-hexanol, insbesondere z.B. Methanol/n- Butanol.

Eine weitere Gruppe der Aminoharze, die sich in Aufbau und Eigenschaften sehr ähnlich zu den Melamin-Formaldehyd-Harzen verhalten, sind die Benzoguanaminharze (Benzoguanamin/Formaldehydharze). Freie OH-Gruppen können auch zumindest teilweise mit niederen Alkoholen, besonders C1-C4-Alkoholen, besonders bevorzugt Methanol oder n-Butanol, verethert sein.

Als weitere Aminoharze zu nennen sind beispielsweise Harnstoffharze, also Polykondensationsprodukte von Harnstoff und Formaldehyd (Kurzbezeichnung UF, 5 nach DIN EN ISO 1043-1: 2002-6). Freie OH-Gruppen können auch zumindest teilweise mit niederen Alkoholen, besonders C1-C4-Alkoholen, besonders bevorzugt Methanol oder n-Butanol, verethert sein.

Das eingesetzte Melamin-Formaldehyd-Harz kann mindestens ein Lösungsmittel enthalten respektive damit gemischt werden. Beispiele für derartige Lösungsmittel sind Alkohole, aromatische und/oder (cyclo)aliphatische Kohlenwasserstoffe und deren Gemische, Ester, Ether, Carbonate und halogenierte Kohlenwasserstoffe. Bevorzugt sind Alkylalkohole, wie beispielsweise Methanol, Ethanol, iso-Propanol, n-Propanol, n-Butanol, iso-Butanol, oder 2-Ethyl-hexanol, oder aromatische Kohlenwasserstoffe, wie beispielsweise Toluol oder Xylol-Isomerengemische. Besonders bevorzugt sind Methanol, Ethanol, n-Butanol, iso-Butanol, 2-Ethyl-hexanol, Xylol und deren Gemische, insbesondere n-Butanol/Xylol oder Methanol/Ethanol. Ester sind beispielsweise n-Butylacetat, Ethylacetat, 1-Methoxypropylacetat-2 und 2-Methoxyethylacetat, sowie die Mono- und Diacetylester von Ethylenglykol, Diethylenglykol, Triethylenglykol, Propylenglykol, Dipropylenglykol oderTripropylenglykol, wie beispielsweise Butylglykolacetat. Weitere Beispiele sind auch Carbonate, wie bevorzugt 1,2-Ethylencarbonat, 1,2-Propylencarbonat oder 1,3-Propylencarbonat. Ether sind beispielsweise Tetrahydrofuran (THF), Dioxan sowie die Dimethylether, Diethylether oder Di-n-butylethervon Ethylenglykol, Diethylenglykol, Triethylenglykol, Propylenglykol, Dipropylenglykol oder Tripropylenglykol. Weiterhin geeignet ist Wasser.

Bei der Komponente (B) handelt es sich um ein oder mehrere polymere Polyole, die gegenüber Melamin-Formaldehyd-Harzen reaktive Gruppen enthalten. Insbesondere handelt es sich um Poly(meth)acrylatpolyole (B1), Polyesterole (B2), Polyetherole (B3), die durch Kondensation von Polycarbonsäuren mit Diolen erhältlich sind, Alkydharze (B4) oder Poly- carbonatpolyole (B5).

Die hydroxylgruppenhaltigen Polymere (B) weisen pro Molekül statistisch im Mittel mindestens zwei, bevorzugt zwei bis zehn, besonders bevorzugt drei bis zehn und ganz besonders bevorzugt drei bis acht Hydroxylgruppen auf.

Die Bestimmung von Hydroxylzahlen basiert auf DIN 53240-2:2007-11. Bei der Berechnung wird die Säurezahl berücksichtigt. Die Bestimmung von Säurezahlen erfolgt gemäß DIN EN ISO 2114:2000, Verfahren A.

Bei den Poly(meth)acrylatpolyolen (B1) handelt es sich beispielsweise um solche Copolymere von (Meth)acrylsäureestern mit mindestens einer Verbindung mit mindestens einer, bevorzugt genau einer Hydroxylgruppe und mindestens einer, bevorzugt genau einer (Meth)acrylatgruppe.

Vorzugsweise ist das hydroxylgruppenhaltige Polymer (B) ein Poly(meth)acrylatpolyol (B1) mit einem zahlenmittleren Molekulargewicht Mn von 500 bis 50.000 D, bevorzugt von 800 bis 5.000 D, besonders bevorzugt von 1.000 bis 2.000 D.

Letztere können beispielsweise Monoester sein von a,ß-ungesättigten Carbonsäuren, wie z.B. Acrylsäure, Methacrylsäure (in dieser Schrift kurz als "(Meth)acrylsäure" bezeichnet), mit Di- oder Polyolen, die vorzugsweise 2 bis 20 C-Atome und wenigstens zwei Hydroxylgruppen aufweisen, wie Ethylenglykol, Diethylenglykol, Triethylenglykol, 1 ,2-Propylenglykol, 1,3-Propylenglykol, 1,1-Dimethyl-1,2-Ethandiol,Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-Propandiol, 2-Methyl-1,3-Propandiol, 2-Butyl-2-ethyl-1,3-Propandiol, 1,6-Hexandiol, 2-Methyl-1,5-pentandiol, 2-Ethyl-1,4-butandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Bis(hy-droxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem zahlenmittleren Molgewicht zwischen 162 und 2000, Poly- 1,3-propandiol oder Polypropylenglykol mit einem zahlenmittleren Molgewicht zwischen 134 und 2000 oder Polyethylenglykol mit einem zahlenmittleren Molgewicht zwischen 238 und 2000.

Bevorzugt sind 2-Hydroxyethylacrylat, 2-Hydroxyethylmethacrylat, 2-Hydroxy-propylacrylat, 3-Hydroxy-propylacrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat.

Die hydroxylgruppentragenden Monomere werden vorzugsweise copolymerisiert im Gemisch mit anderen polymerisierbaren, bevorzugt radikalisch polymerisierbaren Comonomeren. Bevorzugt sind Gemische, welche zu mehr als 50 Gew.-% aus C₁-C₂₀-Alkyl(meth)acrylat, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymere (B1), die zu mehr als 60 Gew.-% aus C₁-C₁₀-Alkyl(meth)acry- laten, Styrol oder deren Mischungen bestehen. Die Poly(meth)acrylatpolyole (B1) enthalten be- vorzugt 5 bis 50 Gew.%, insbesondere 10 bis 40 Gew.% hydroxylgruppentragenden Monomere. Darüber hinaus können die hydroxylfunktionellen Polymere gegebenenfalls weitere Monomere enthalten, z.B. ethylenisch ungesättigte Säuren, insbesondere Carbonsäuren, Säureanhydride oder Säureamide.

Als Lösungsmittel für Komponente (B1) kommen beispielsweise in Betracht: Aromaten, wie Solvent Naphtha, Xylole, Toluol, Ester wie Ethylacetat, Butylacetat, Methylglykolacetat, Ethylglykolacetat, Butylglykolacetat, Methoxypropylacetat, tert.-Butylacetat, Ether wie Butylglykol, Tetrahydrofuran, Dioxan, Ethyl-glykolether, Ketone wie Aceton, Methylethylketon, Methylamylketon, Methylisobutylketon und/oder Alkoholewien-Butanol, iso-Butanol, Butylglykol, und aliphatische Kohlenwasserstoffe. Bevorzugt sind Butylacetat und Xylol.

Weitere Bindemittel sind Polyesterole (B2), die durch Kondensation von Polycarbonsäuren mit Diolen erhältlich sind. Bevorzugt sind Polyesterpolyole (Polyesterole), d.h. Polyester, die zwei oder mehr Hydroxylgruppen aufweisen.

Polyesterpolyole, sind z.B. aus Ullmanns Enzyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle derfreien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Oxalsäure, Maleinsäure, Fumarsäure, Bernsteinsäure, Glutarsäure, Adipinsäure, Sebacinsäure, Dodekandisäure, ortho-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydro-phthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren. Bevorzugt sind Dicarbonsäuren der allgemeinen Formel HOOC-(CH₂)_{y}-COOH, wobei y eine Zahl von 1 bis20, bevorzugt eine gerade Zahl von 2 bis 20 ist, besonders bevorzugt Bernsteinsäure, Adipinsäure, Sebacinsäure und Dodecandicarbonsäure.

Als Lösungsmittel für Komponente (B2) kommen grundsätzlich die gleichen in Betracht wie für Komponente (B1). Bevorzugte Lösungsmittel für Polyesterole sind Ester wie Butylacetat und tert.-Butylacetat und Aromaten wie Solvent Naphtha, Xylol und Toluol.

Weiterhin sind als hydroxylgruppenhaltige Polymere (B) auch Polyetherole (B3) geeignet, die z.B. durch Addition von Ethylenoxid, Propylenoxid oder Butylenoxid an H-aktive Komponenten hergestellt werden können. Ebenso sind Polykondensate aus Butandiol geeignet.

Bei den hydroxylgruppenhaltigen Polymeren kann es sich natürlich auch um Verbindungen mit zu den Hydroxylgruppen zusätzlichen primären oder sekundären Aminogruppen handeln.

Bei Alkydharzen (B4) handelt es sich um Polykondensationsharze aus Polyolen, mehrwertigen Carbonsäuren und fetten Ölen oder freien natürlichen und/oder synthetischen Fettsäuren; mindestens ein Polyol muss tri- oder höherfunktionell sein. Als Polyole und mehrwertige Carbonsäuren können beispielsweise die Komponenten eingesetzt werden, die oben bei den Polyesterolen genannt sind. Bevorzugte mehrwertige Alkohole sind Glycerin, Pentaerythrit, Trimethylolethan, Trimethylolpropan, verschiedene Diole wie Ethan-/Propandiol, Diethylenglykol, Neopentylglykol. Bevorzugte mehrwertige Carbonsäuren sind Phthalsäure, Phthalsäureanhydrid (PSA), Isophthalsäure, Terephthalsäure, Trimellitsäureanhydrid, Adipinsäure, Azelainsäure, Sebacinsäure.

Als Ölkomponente bzw. Fettsäure kommen beispielsweise trocknende Öle, wie Leinöl, Oiticicaöl oder Holzöl, halbtrocknende Öle, wie Sojaöl, Sonnenblumenöl, Safloröl, Rizinenöl oder Tallöl, nicht-trocknende Öle, wie Rizinusöl, Kokosöl oder Erdnussöl, oder freie Fettsäuren obiger Öle oder synthetische Monocarbonsäuren in Betracht.

Die zahlenmittlere Molmasse typischer Alkydharze liegt zwischen 1500 und 20000 D, bevorzugt zwischen 3500 und 6000 D. Die Säurezahl beträgt bevorzugt 2 bis 30 mg KOH/g, bei wasserverdünnbaren Harzen auch 35-65 mg KOH/g. Die OH-Zahl beträgt in der Regel bis zu 300, bevorzugt bis zu 100 mg KOH/g.

Ferner kommen auch Polycarbonatpolyole (B5), wie sie z.B. durch Umsetzung von Phosgen mit einem Überschuss von den als Aufbaukomponenten für die Polyesterpolyole genannten niedermolekularen Alkohole erhalten werden können, in Betracht.

Bei dem verzweigten Polyesterpolyol der Komponente (C) handelt es sich um mindestens ein, beispielsweise ein bis drei, bevorzugt ein bis zwei und besonders bevorzugt genau ein hochfunktionelles, vorzugsweise hoch- oder hyperverzweigtes Polyesterpolyol. Das zahlenmittlere Molekulargewicht Mn ist vorzugsweise mindestens 500, bevorzugt mindestens 700. Die obere Grenze des Molekulargewichts Mn ist bevorzugt 30.000 g/mol, besonders bevorzugt 10.000 g/mol, ganz besonders bevorzugt 4.000 g/mol. In einer bevorzugten Ausführungsform beträgt das Molekulargewicht Mn von 500 bis 4000, insbesondere von 700 bis2.500 g/mol, insbesondere von 950 bis 2.000 g/mol. Die Polydispersität Mw/Mn ist vorzugsweise von 1,1 - 50, besonders bevorzugt kleiner oder gleich 5, insbesondere kleiner 3,5.

Die verzweigten Polyesterpolyole der Komponente (C) sind erhältlich durch Polykondensation von
- Hexahydrophthalsäureanhydrid,
- Trimethylolpropan,
- optional mindestens eines Diols, wobei das molare Mischungsverhältnis von Hydroxylgruppen des Trimethylpropans zu den Hydroxylgruppen der Summe aller Diole oberhalb von 1:1 liegt,
- optional mindestens eines weiteren Triols,
- optional mindestens einer weiteren Di- oder Tri-Säure oder deren Derivaten

Die Säuren und Polyole des Polyesterpolyols (C) werden, bezogen auf Säure- und Hydroxylgruppen, in einem molaren Mischungsverhältnis von 1:1 bis 1:1,95, bevorzugt von 1:1,1 bis 1:1,8 oder von 1:1,2 bis 1:1,8 eingesetzt. In einer Ausführungsform werden sie bevorzugt in einem molaren Mischungsverhältnis von 1:1,15 bis 1:1,6 oder von 1,2 bis 1,6 eingesetzt. Vorzugsweise wird das Polyesterpolyol (C) ausschließlich aus Hexahydrophthalsäureanhydrid und Trimethylolpropan in einem molaren Mischungsverhältnis von Säuregruppen zu Hydroxylgruppen von 1:1,1 bis 1:1,6 hergestellt.

Die Polyesterpolyole (C) besitzen eine Summe von Säurezahl gemäß DIN EN
ISO 2114:2000 und Hydroxylzahl gemäß DIN 53240-2:2007-11 von 200 bis 400, bevorzugt 250 bis 400 mg KOH/g. Bevorzugt beträgt die OH-Zahl 130 bis 280 mg KOH/g. Bevorzugt beträgt die Säurezahl von 8 bis 110 mg KOH/g. In spezifischen Variationen beträgt die Säurezahl vorzugsweise größer oder gleich 33 mg KOH/g, z.B. von 33 bis 100 mg KOH/g, oder größer oder gleich 40, insbesondere 70 bis 100 mg KOH/g bezogen auf Feststoff.

Die Polyesterpolyole (C) weisen vorzugsweise eine Glasübergangstemperatur von -60 bis 100 °C, von -50 bis 90 °C und besonders bevorzugt von -40 bis 80 °C, von -20 bis 50 °C oder von - 15 bis 50 °C auf. Die Glasübergangstemperatur wird gemessen gemäß ASTM-Vorschrift 03418-03 über Differential Scanning Calorimetry (DSC), mit einer Aufheizrate von 10 °C/min.

Die Polyesterpolyole (C) sind üblicherweise gut löslich, d.h. man kann bei 25 °C klare Lösungen mit einem Gehalt bis zu 50 Gew.-%, in einigen Fällen sogar bis zu 80 Gew.-%, der erfindungsgemäßen Polyesterpolyole in Tetrahydrofuran (THF), Ethylacetat, n-Butylacetat, Alkoholen wie z.B. Methanol, Ethanol, Butanol, iso-Butanol und anderen Lösemitteln darstellen, ohne dass mit bloßem Auge Gelpartikel detektierbar sind.

Zu den optionalen Dicarbonsäuren gehören beispielsweise aliphatische Dicarbonsäuren, wie Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure. Weiterhin können auch aromatische Dicarbonsäuren, wie zum Beispiel Phthalsäure, Isophthalsäure oder Terephthalsäure verwendet werden. Auch ungesättigte Dicarbonsäuren, wie Maleinsäure oder Fumarsäure sind einsetzbar, wenn auch weniger bevorzugt.

Die genannten Dicarbonsäuren können auch substituiert sein mit einem oder mehreren Resten, ausgewählt aus:
C₁-C₂₀-Alkylgruppen, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, Trimethylpentyl, n-Nonyl, n-Decyl, n-Dodecyl, n-Octadecyl und n-Eicosyl; C₃-C₁₂-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl; Alkylengruppen wie Methylen oder Ethyliden; oder C₅-C₁₄-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl. Als beispielhafte Vertreter für substituierte Dicarbonsäuren seien genannt: 2-Methylmalonsäure, 2-Ethylmalonsäure, 2-Phenylmalonsäure, 2-Methylbernsteinsäure, 2-0ctadecenylbernstein-säure und dessen Anhydrid (siehe unten), 2-Ethylbernsteinsäure, 2-Phenylbernsteinsäure, Itaconsäure, 3,3-Dimethylglutarsäure. Weiterhin lassen sich Gemische von zwei oder mehreren der vorgenannten Dicarbonsäuren einsetzen.

Die Dicarbonsäuren lassen sich entweder als solche oder in Form von Derivaten einsetzen. Unter Derivaten werden bevorzugt verstanden
- die betreffenden Anhydride in monomerer oder auch polymerer Form,
- Mono- oder Dialkylester, bevorzugt Mono- oder Di-C₁-C₄-alkylester, besonders bevorzugt Mono- oder Dimethylester oder die entsprechenden Mono- oder Diethylester,
- ferner Mono- und Divinylester sowie
- gemischte Ester, bevorzugt gemischte Estermit unterschiedlichen C₁-C₄-Alkylkomponenten, besonders bevorzugt gemischte Methylethylester.

C₁-C₄-Alkyl bedeutet im Rahmen dieser Schrift Methyl, Ethyl, iso-Propyl, n-Propyl, n-Butyl, iso-Butyl, sek-Butyl und tert.-Butyl, bevorzugt Methyl, Ethyl und n-Butyl, besonders bevorzugt Methyl und Ethyl und ganz besonders bevorzugt Methyl.

Es ist auch möglich, ein Gemisch aus einer Dicarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Dicarbonsäuren einzusetzen. Optionale Dicarbonsäuren sind insbesondere Malonsäure, Sebacinsäure, Bernsteinsäure, Glutarsäure, Adipinsäure, 1,2-, 1,3- oder 1,4-Cyclohexandicarbonsäure (Hexahydrophthalsäuren), Phthalsäure, Isophthalsäure, Terephthalsäure oder deren Mono- oder Dialkylester. Ein bevorzugtes Disäure-Derivat istAdipinsäuredimethylester.

In einer Ausführungsform der Erfindung wird das verzweigte Polyesterpolyol (C) nicht unter Verwendung einerweiteren Disäure (neben dem Hexahydrophthalsäureanhydrid) oder deren Derivaten oder Trisäuren oder deren Derivaten hergestellt.

Optionale Tricarbonsäuren oder Polycarbonsäuren (Ax) sind beispielsweise Aconitsäure, 1,3,5-Cyclohexantricarbonsäure, 1,2,4-Benzoltricarbonsäure, 1,3,5-Benzoltricarbonsäure, 1,2,4,5-Benzoltetracarbonsäure (Pyromellitsäure) sowie Mellitsäure und niedermolekulare Polyacrylsäuren. Der Index "x" steht dabei für die Funktionalität an Carboxygruppen, für die "A" steht, wobei gilt x >= 3, bevorzugt x=3 oder 4 und besonders bevorzugt x=3. Tricarbonsäuren oder Polycarbonsäuren (Ax) lassen sich in dererfindungsgemäßen Reaktion entweder als solche oder aber in Form von Derivaten einsetzen.

Unter Derivaten werden bevorzugt verstanden
- die betreffenden Anhydride in monomerer oder auch polymerer Form,
- Mono- Di- oder Trialkylester, bevorzugt Mono- Di-, oder Tri-C₁-C₄-alkylester, besonders bevorzugt Mono-, Di- oder Trimethylester oder die entsprechenden Mono-, Di- oder Triethylester,
- ferner Mono-, Di- und Trivinylester sowie
- gemischte Ester, bevorzugt gemischte Ester mit unterschiedlichen C₁-C₄-Alkylkomponenten, besonders bevorzugt gemischte Methylethylester.

Im Rahmen der vorliegenden Erfindung ist es auch möglich, ein Gemisch aus einer Tri- oder Polycarbonsäure und einem oder mehreren ihrer Derivate einzusetzen, zum Beispiel eine Mischung aus Pyromellitsäure und Pyromellitsäuredianhydrid. Gleichfalls ist es im Rahmen der vorliegenden Erfindung möglich, ein Gemisch mehrerer verschiedener Derivate von einer oder mehreren Tri- oder Polycarbonsäuren einzusetzen, z.B. eine Mischung aus 1,3,5-Cyclohexantricarbonsäure und Pyromellitsäuredianhydrid.

Als optionale weitere Diole gemäß der vorliegenden Erfindung verwendet man beispielsweise Ethylenglykol, Propan-1 ,2-diol, Propan-1,3-diol,2-Butyl-2-ethyl-1,3-propandiol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,2-Decandiol, 1,10-Decandiol, 1,2-Dodecandiol, 1,12-Dodecandiol, 1,5-Hexadien-3,4-diol, 1,2- und 1,3-Cyclopentandiole, 1,2-, 1,3- und 1,4-Cyclohexandiole, 1,1-, 1,2-, 1,3- und 1,4-Bis-(Hydroxymethyl)cyclohexane, 1,1-, 1,2-, 1,3- und 1,4-Bis-(Hydroxyethyl)cyclohexane, Neopentylglykol, (2)-Methyl-2,4-pentandiol,2,4-Dimethyl-2,4-Pentandiol, 2-Ethyl-1,3-hexandiol,2,5-Dimethyl-2,5-hexandiol,2,2,4-Trimethyl-1,3-pentan-diol, Pinacol, Diethylenglykol, Triethylenglykol, Dipropylenglykol, Tripropylenglykol, Polyethylenglykole HO(CH₂CH2O)ₙ-H oder Polypropylenglykole HO(CH[CH₃]CH₂O)ₙ-H, wobei n eine ganze Zahl und n >= 4 ist, Polyethylen-polypropylenglykole, wobei die Abfolge der Ethylenoxid- oder Propylenoxid-Einheiten blockweise oder statistisch sein kann, Polytetramethylenglykole, vorzugsweise bis zu einem zahlenmittleren Molgewicht bis zu 5000 g/mol, Poly-1,3-Propandiole, vorzugsweise mit einem zahlenmittleren Molgewicht bis zu 5000 g/mol, Polycaprolactone oder Gemische von zwei oder mehr Vertretern der voranstehenden Verbindungen. Dabei kann eine oder auch beide Hydroxylgruppen in den vorstehend genannten Diolen durch SH-Gruppen substituiert werden. Bevorzugt eingesetzte Diole sind Ethylenglykol, 1,2-Propandiol, 1,3-Propandiol, 2-Butyl-2-ethyl-1,3-propandiol, 1,4-Butandiol, 1,5-Pentandiol, Neopentylglykol, 1,6-Hexandiol, 1,8-Octandiol, 1,2-, 1,3- und 1,4-Cyclo-hexandiol, 1,3- und 1,4-Bis(hydroxymethyl)cyclo-hexan, sowie Diethylenglykol, Triethylenglykol, Dipropylenglykol und Tripropylenglykol.

Besonders bevorzugt sind Isomere oder Isomerengemische von Tricyclodecandimethanol, (optional mit Alkylgruppen substituiertes) Tetrahydro-2,5-bis-(hydroxymethyl)-furan, Neopentylglykol, 2-Butyl-2-ethyl-1,3-propandiol, und 1,6-Hexandiol, ganz besonders bevorzugt sind Neopentylglykol und 2-Butyl-2-ethyl-1,3-propandiol. In einer Ausführungsform ist das Polyesterpolyol (C) gebildet ausschließlich aus Hexahydrophthalsäureanhydrid, Trimethylolpropan und Diolen ausgewählt aus der Gruppe bestehend aus den Isomeren oder Isomerengemischen von Tricyclodecandimethanol, Tetrahydro-2,5-bis-(hydroxymethyl)-furan, 1,6-Hexandiol, Neopentylglykol und 2-Butyl-2-ethyl-1,3-propandiol. Besonders bevorzugt ist das Polyesterpolyol (C) gebildet ausschließlich aus Hexahydrophthalsäureanhydrid, Trimethylolpropan und Neopentylglykol.

Bevorzugt liegt das molare Mischungsverhältnis von Hydroxylgruppen des Trimethylolpropans zu den Hydroxylgruppen der Summe aller Diole bei 1,1:1 bis3:1.

Optionale mindestens trifunktionelle Alkohole (B_{y}) umfassen Glycerin, Trimethylolmethan, Trimethylolethan, 1,2,4-Butantriol, Tris(hydroxymethyl)amin, Tris(hydroxyethyl)amin, Tris(hydroxypropyl)amin, Pentaerythrit, Diglycerin, Triglycerin oder höhere Kondensationsprodukte des Glycerins, Di(trimethylolpropan), Di(pentaerythrit), Trishydroxymethylisocyanurat, Tris(hydroxyethyl)isocyanurat (THEIC), Tris(hydroxypropyl)isocyanurat, Inositole oder Zucker, wie zum Beispiel Glucose, Fructose oder Sucrose, Zuckeralkohole wie z.B. Sorbit, Mannit, Threit, Erythrit, Adonit (Ribit), Arabit (Lyxit), Xylit, Dulcit (Galactit), Maltit, Isomalt, tri- oder höherfunktionelle Polyetherole auf Basis tri- oder höherfunktioneller Alkohole und Ethylenoxid, Propylenoxid und/oder Butylenoxid. Dabei sind Glycerin, Diglycerin, Triglycerin, Trimethylolethan, Di-Trimethylolpropan, 1,2,4-Butantriol, Pentaerythrit, Tris(hydroxyethyl)isocyanurat sowie deren Polyetherole auf Basis von Ethylenoxid und/oder Propylenoxid besonders bevorzugt. Ganz besonders bevorzugt sind Glycerin, Di-Trimethylolpropan und Pentaerythrit. Der Index "y" steht dabei für die Funktionalität an Hydroxylgruppen, für die "B" steht, wobei gilt y >= 3, bevorzugt y=3 oder 4 und besonders bevorzugt y=3.

Das Polyesterpolyol enthält, stöchiometrisch bezogen auf Hexahydrophthalsäureanhydrid, weniger als 20 %, bevorzugt weniger als 10 %, besonders bevorzugt keinen tetrafunktionellen Alkohol. Ein höherer Anteil tetrafunktioneller Alkohole führt bereits bei geringeren Umsätzen zu einer Vergelung des resultierenden Polyesterpolyols. Neben derVergelungsgefahr als solcher, versucht man dies durch einen niedrigeren Umsatz zu umgehen. Dies führt dann wiederum zu einem höheren Restmonomergehalt. Dieser ist unerwünscht und kann sich gegebenenfalls z.B. als Weichmacher in Lacken negativ auswirken. Tetra-Alkohole weisen zudem eine hohe Polarität auf, insbesondere Pentaerythrit. Dies erhöht wiederum die Unverträglichkeit des Polyesterpolyols (C) mit anderen Lackkomponenten wie den Poly(meth)acrylatpolyolen (B1).

Die verzweigten Polyesterpolyole (C) können in Substanz oder in Gegenwart eines Lösemittels hergestellt werden. In einer bevorzugten Ausführungsform wird die Reaktion frei von Lösungsmittel durchgeführt, wobei das Polyesterpolyol anschließend in Lösungsmittel gelöst werden kann.

Zur Durchführung des Verfahrens kann man in Gegenwart eines Wasser entziehenden Mittels als Additiv arbeiten, das man zu Beginn der Reaktion zusetzt. Geeignet sind beispielsweise Molekularsiebe, insbesondere Molekularsieb 4A, MgSQ4 und Na2SO4. Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen, bei dem das Wasser mit Hilfe eines Schleppmittels entfernt wird.

Weiterhin kann die Abtrennung durch Strippen erfolgen, beispielsweise durch Durchleiten eines unter den Reaktionsbedingungen inerten Gases durch das Reaktionsgemisch erfolgen, gegebenenfalls zusätzlich zu einer Destillation. Als Inertgase eignen sich vorzugsweise Stickstoff, Edelgase, Kohlendioxid oder Verbrennungsgase.

Weiterhin kann die Abtrennung unter reduziertem Druck erfolgen.

Vorzugsweise wird das Polyesterpolyol (C) in Abwesenheit von Katalysatoren hergestellt, insbesondere in Abwesenheit von metallorganischen Katalysatoren, insbesondere ohne Zinn-Katalysator, sodass das Polyesterpolyol (C) Zinn-frei ist. Falls Katalysatoren verwendet werden, so geschieht dies vorzugsweise mit einem (metallorganischen) Zink-, Titan-, Zirkon-, Bismut-, oder Aluminium-Katalysator oder einem anderen nicht Zinn enthaltenden Katalysator, z.B. einem sauren anorganischen oder einem sauren organischen Katalysator oder deren Gemisch, bevorzugt einem Titan enthaltenden Katalysator.

Als saure anorganische Katalysatoren sind beispielsweise Schwefelsäure, Sulfate und Hydrogensulfate, wie Natriumhydrogensulfat, Phosphorsäure, Phosphonsäure, hypophosphorige Säure, Aluminiumsulfathydrat, Alaun, saures Kieselgel (pH <= 6, insbesondere <= 5) und saures Aluminiumoxid zu nennen. Weiterhin sind beispielsweise Aluminiumverbindungen der allgemei- nen Formel AI(OR³)₃ und Titanate der allgemeinen Formel Ti(OR³)₄ als saure anorganische Katalysatoren einsetzbar, wobei die Reste R³ jeweils gleich oder verschieden sein können und unabhängig voneinander gewählt sind aus C₁-C20-Alkylresten, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl, n-Decyl, n-Dodecyl, n-Hexadecyl oder n-Octadecyl; C₃-C₁₂-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopen- tyl, Cyclohexyl und Cycloheptyl. Bevorzugt sind die Reste R³ in Al(OR³)₃ bzw. Ti(OR³)₄ jeweils gleich und gewählt aus n-Butyl, Isopropyl oder 2-Ethylhexyl.

Bevorzugt ist, dass das Polyesterpolyol (C) in einem einstufigen Prozess hergestellt wird.

Das Verfahren zur Herstellung des Polyesterpolyols (C) wird vorzugsweise unter Inertgasatmosphäre, d.h. einem unter den Reaktionsbedingungen inerten Gas, durchgeführt, beispielsweise unter Kohlendioxid, Verbrennungsgasen, Stickstoff oder Edelgas, unter denen insbesondere Argon zu nennen ist. Das Verfahren wird bei Temperaturen von 60 bis 250°C durchgeführt. Vorzugsweise arbeitet man bei Temperaturen von 150 bis 200, besonders bevorzugt bei 160 bis 180°C. Die Druckbedingungen des erfindungsgemäßen Verfahrens sind in der Regel unkritisch. Man kann bei deutlich verringertem Druck arbeiten, beispielsweise bei 10 bis 500 mbar. Das Verfahren kann auch bei Drücken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drucken bis 10 bar. Bevorzugt ist die Umsetzung bei verringertem oder Atmosphärendruck, besonders bevorzugt bei Atmosphärendruck. Die Umsetzungsdauer des Verfahrens nach Aufheizen auf die Reaktionstemperatur ist abhängig von den Rohstoffen und gewünschten Produktenddaten, wie Säurezahl (und Hydroxylzahl). Sie beträgt üblicherweise 1 bis 48 Stunden, bevorzugt 2 bis 26 Stunden. In Abwesenheit von Adipinsäuredimethylester kann in einer bevorzugten Form 2 bis 8 Stunden, bei Einsatz von Adipinsäuredimethylester kann Sie z.B. 16 bis 26 Stunden brauchen. Alternativ kann die Reaktionszeit durch höhere Temperaturen verkürztwerden.

In Anwesenheit von Di-/Trisäuren oder deren Dialkylester können die Reaktionszeiten signifikant verlängert und/oder Reaktionstemperaturen signifikant erhöht sein um den gleichen Umsatz wie in Abwesenheit dieser Bausteine zu erhalten. Die Abwesenheit solcher Bausteine kann in Bezug auf den Herstellungsaufwand von Vorteil sein.

Nach beendeter Reaktion lassen sich die hochfunktionellen hoch- und hyperverzweigten Polyesterpolyole leicht isolieren, gegebenenfalls durch Abfiltrieren des Katalysators und gegebenenfalls Abziehen des Lösemittels, wobei man das Abziehen des Lösemittels üblicherweise bei vermindertem Druck durchführt. Weitere gut geeignete Aufarbeitungsmethoden sind Ausfällen des Polymeren nach Zugabe von Wasser und anschließendes Waschen und Trocknen. Vorzugsweise erfolgt das Verfahren zur Herstellung des Polyesterpolyols (C) ohne Katalysator und ohne Lösungsmittel.

In einer Ausführungsform der Erfindung können die erfindungsgemäßen Polyesterpolyole neben den bereits durch die Reaktion erhaltenden funktionellen Gruppen weitere funktionelle Gruppen aufweisen. Eine nachträgliche Funktionalisierung kann man erhalten, indem dererhaltene hochfunktionelle, hoch- oder hyperverzweigte Polyesterpolyol in einem zusätzlichen Verfahrensschritt mit einem geeigneten Funktionalisierungsreagenz umsetzt, welches mit den OH- und/oder Carboxyl-Gruppen des Polyesterpolyols reagieren kann.

Eine Funktionalisierung von hydroxylgruppenhaltigen erfindungsgemäßen Polyesterpolyole mit gesättigten oder ungesättigten, aliphatischen, cycloaliphatischen, araliphatischen oder aromatischen Monocarbonsäuren kann bevorzugt ausschließlich nachträglich, d.h. nach Beendigung der eigentlichen Umsetzung in einem gesonderten Schritt erfolgen. Geeignete gesättigte Monocarbonsäuren können 1 bis 30 Kohlenstoffatome umfassen, bevorzugt 2 bis 30, besonders bevorzugt 4 bis 25, ganz besonders bevorzugt 6 bis 20 und insbesondere 8 bis 20 Kohlenstoffatome. Beispiele für geeignete gesättigte Monocarbonsäuren sind Ameisensäure, Essigsäure, Propionsäure, Buttersäure, Pivalinsäure, Capronsäure, 2-Ethylhexansäure, Octansäure, Isononansäure, Caprinsäure, Undecansäure, Laurinsäure, Myristinsäure, Pentadecansäure, Palmitinsäure, Margarinsäure, Stearinsäure, Nonadecansäure, Arachinsäure, Behensäure, Ölsäure, Linolsäure, Linolensäure, Benzoesäure, a- oder β-Naphthalinsäure. Monocarbonsäuren können in Mengen bis zu 20 Gew.-%, bevorzugt bis maximal 15 Gew.-% bezogen auf Hexahydrophthalsäureanhydrid eingesetzt werden. Geeignete a,ß-ungesättigte Monocarbonsäuren können 3 bis 20 Kohlenstoffatome umfassen, bevorzugt 3 bis 10, besonders bevorzugt 3 bis 6, ganz besonders bevorzugt 3 bis 5 und insbesondere 3 bis 4 Kohlenstoffatome. Beispiele für geeignete a,ß-ungesättigte Monocarbonsäuren sind Acrylsäure, Methacrylsäure, Ethacrylsäure, a-Chloracryl-säure, Maleinsäure, Fumarsäure, Itaconsäure, Crotonsäure, Citraconsäure, Mesaconsäure oder Glutaconsäure, bevorzugt sind Acrylsäure, Methacrylsäure, Maleinsäure, Fumarsäure, Itaconsäure und Crotonsäure, besonders bevorzugt sind Acrylsäure, Methacrylsäure, Maleinsäure, Fumarsäure und Crotonsäure, ganz besonders bevorzugt sind Acrylsäure und Methacrylsäure und insbesondere Acrylsäure. Die Umsetzung mit gesättigten oder ungesättigten Monocarbonsäuren kann statt mit den Carbonsäuren auch mit deren Derivaten erfolgen, beispielsweise mit deren Anhydriden, Chloriden oder Estern, bevorzugt mit deren Anhydriden oder Estern, besonders bevorzugt mit deren Estern mit C₁-C₄-Alkylalkoholen, ganz besonders bevorzugt mit deren Methylestern.

Bevorzugt gibt es keine weitere Funktionalisierung.

Optional kann die einkomponentige Aminoharzbeschichtungsmasse in Kombination mit weiteren chemisch von den übrigen Komponenten verschiedenen Vernetzern (D), beispielsweise blockierten Polyisocyanaten, Trisalkylcarbamoyltriazinen (TACT), Epoxiden, carboxy- und aminogruppenhaltigen Harzen als vernetzende Komponente eingesetzt werden. Die chemischen Vernetzer können in Abhängigkeit von Typ und System in üblichen, dem Fachmann bekannten Mengen eingesetzt werden, z.B. von 0 bis 40 Gew.% oder von 0,1 bis 25 Gew.%, bezogen auf den Feststoffgehalt.

Bei blockierten Polyisocyanaten sind zur Blockierung eingesetzte Verbindungsklassen z.B. beschrieben in D. A. Wicks, Z. W. Wicks, Progress in Organic Coatings, 36, 148-172 (1999), 41, 1-83 (2001) sowie 43, 131-140 (2001). Beispiele für zur Blockierung eingesetzte Verbindungsklassen sind Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate. Die Polyisocyanate sind ausgewählt aus der Gruppe bestehend aus Isocyanuraten, Iminooxadiazindionen, Biureten, Uretdionen, Urethanen und Allophanaten, bevorzugt Isocyanuraten. In einer bevorzugten Ausführungsform handelt es sich bei dem Polyisocyanat um Isocyanuratgruppen enthaltende Polyisocyanate von 1,6-Hexamethylendiisocyanat oder 1-Isocyanato-3,3,5-trimethyl-5-(isocyanatomethyl)-cyclohexan (Isophorondiisocyanat), besonders bevorzugt von 1,6-Hexamethylendiisocyanat.

Die einkomponentige, lösngsmittelhaltige Aminoharzbeschichtungsmasse enthält zusätzlich Lösungsmittel (E). Geeignete Lösungsmittel sind die oben für die Komponenten (B) beschriebenen. Lösungsmittel (E) werden in der Aminoharzbeschichtungsmasse in einer Menge von vorzugsweise Obis 80 Gew.%, besonders bevorzugt von 20 bis 70 Gew.%, insbesondere 30 bis 60 Gew.% eingesetzt.

Optional kann die einkomponentige, lösungsmittelhltige Aminoharzbeschichtungsmasse Katalysatoren enthalten.

Die Katalysatoren sind vorzugsweise in Form von Säuren (F). Unter schwachen und mittelstarken, als Katalysator geeigneten Säuren werden dabei im Rahmen dieser Schrift ein- oder mehrwertige, organische oder anorganische, bevorzugt organische Säuren mit einem pKs-Wert zwischen 1,6 und 5,2, bevorzugt zwischen 1,6 und 3,8 verstanden.

Beispiele für als Katalysator geeignete schwache und mittelstarke Säuren sind Kohlensäure, Phosphorsäure, Ameisensäure, Essigsäure und Maleinsäure, Glyoxylsäure, Bromessigsäure, Chloressisgsäure, Thioglykolsäure, Glycin, Cyanessigsäure, Acrylsäure, Malonsäure, Hydroxypropandisäure, Propionsäure, Milchsäure, 3-Hydroxypropionsäure, Glycerylsäure, Alanin, Sarcosin, Fumarsäure, Acetoessigsäure, Bernsteinsäure, iso-Buttersäure, Pentansäure, Ascorbinsäure, Zitronensäure, Nitrilotriessigsäure, Cyclopentancarbonsäure, 3-Methylglutarsäure, Adipinsäure, Hexansäure, Benzoesäure, Cyclohexancarbonsäure, Heptandionsäure, Heptansäure, Phthalsäure, Isophthalsäure, Terephthalsäure, Tolylsäure, Phenylessigsäure, Phenoxyessigsäure, Mandelsäure oder Sebacinsäure. Als Katalysator bevorzugt sind organische Säuren, bevorzugt ein- oder mehrwertige Carbonsäuren. Besonders bevorzugt sind Ameisensäure, Essigsäure, Maleinsäure oder Fumarsäure. Beispiele für mittelstarke Säuren sind Phosphorsäure, Mono- und Dialkyl-phosphorsäuren.

Unter starken, als Katalysator geeigneten Säuren werden dabei im Rahmen dieser Schrift ein- oder mehrwertige, organische oder anorganische, bevorzugt organische Säuren mit einem pKs-Wert von weniger als 1,6 und besonders bevorzugt weniger als 1 verstanden. Beispiele dafür sind Schwefelsäure, Pyrophosphorsäure, schweflige Säure, Tetrafluoroborsäure, Trichloressig- säure, Dichloressigsäure, Oxalsäure, Nitroessigsäure. Bevorzugt sind organische Säuren, bevorzugt organische Sulfonsäuren. Besonders bevorzugt sind Methansulfonsäure, para-Toluolsulfonsäure, Benzolsulfonsäure, Dodecylbenzolsulfonsäure, Cyclododekansulfonsäure und Camphersulfonsäure.

Die als Katalysator geeigneten Säuren werden im allgemeinen in Mengen bis zu 10 Gew.%, bevorzugt von 0,1 bis 8, besonders bevorzugt von 0,3 bis 6, ganz besonders bevorzugt von 0,5 bis 5 und insbesondere von 1 bis 3 Gew.%, bezogen auf das eingesetzte Aminoharz (A) eingesetzt (fest auf fest). Die Säuren können als freie Säuren oder blockiert eingesetzt werden. Bevorzugt ist der Einsatz von mittelstarken und starken Säuren, optional blockierten, Phosphor- oder Sulfonsäuren, besonders bevorzugt von, optional blockierten, Sulfonsäuren.

Optional kann die einkomponentige Aminoharzbeschichtungsmasse lacktypische Additive (G) enthalten. Die lacktypischen Additive (G) können in Abhängigkeit von ihrer Funktion und der übrigen Zusammensetzung der Beschichtungsmasse in üblichen, dem Fachmann bekannten Mengen eingesetzt werden.

Als lacktypische Additive (G) können beispielsweise Antioxidantien, Stabilisatoren, insbesondere UV-Stabilisatoren wie UV-Absorber und geeignete Radikalfänger (insbesondere HALS-Verbindungen, Hindered Amin Light Stabilizer), Trockenmittel, antistatische Agentien, Flammschutzmittel, Verdicker, thixotrope Agentien, oberflächenaktive Agentien (insbesondere Verlaufsadditive, Entschäumer), Viskositätsmodifikatoren (Rheologieadditive), Plastifizierer, Chelatbildner und/oder Dispergiermittel verwendet werden.

Geeignete Antioxidantien umfassen primäre Antioxidanzien, insbesondere sterisch gehinderte Phenole, insbesondere 2,6-Di-tert.-butyl-4-methylphenol (BHT) und bevorzugt substituierte (3,5-Di-tert.-butyl-4-hydroxyphenyl)-propionsäureester, sekundäre Arylamine, und sekundäre Antioxidanzien, insbesondere aliphatische Phosphite mit aromatischen und/oder aliphatischen Substituenten, Phosphonite, Phosphonate, Thioether, und/oder weitere.

Geeignete UV-Absorber umfassen Oxanilide, Triazine und Benzotriazol (letztere erhältlich z.B. als Tinuvin^{®} -Marken der BASF SE) und Benzophenone (z.B. Chimassorb^{®} 81 der BASF SE). Bevorzugt sind z.B.95 % Benzolpropansäure, 3-(2H-Benzotriazol-2-yl)-5-(1,1-dimethylethyl)-4- hydroxy-, C7-9-verzweigte und lineare Alkylester; 5% 1-Methoxy-2-propylacetat (z.B. Tinuvin^{®} 384) und α-[3-[3-(2H-Benzotriazol-2-yl)-5-(1,1,-dimethylethyl)-4-hydroxyphenyl]-1-oxopropyl]-w-hydroxypoly(oxo-1,2-ethanediyl) (z.B. Tinuvin^{®} 1130), jeweils Produkte z.B. der BASF SE. DL- Alpha-Tocopherol, Tocopherol, Zimtsäurederivate und Cyanoacrylate können ebenfalls zu diesem Zweck eingesetzt werden. Die Menge der UV-Absorber ist zum Beispiel abhängig vom UV- Absorber selber, anderen Komponenten der Beschichtungsmasse, dem gewünschten UV-Schutzumfang und der Schichtdicke des ausgehärteten Lacks. Bevorzugt sind bei 10-20 µm 4-12 Gew.-%, 20-40 µm 2-6 Gew.-%, 40-60 µm 1,5-3 Gew.-% bezogen auf die in der Zubereitung enthaltenen festen Komponenten.

Diese können allein oder zusammen mit geeigneten Radikalfängern, beispielsweise sterisch gehinderten Aminen (oft auch als HALS -oder HAS-Verbindungen bezeichnet; Hindered Amine (Light) Stabilizer) wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Diese sind z.B. erhältlich als Tinuvin^{®}- und Chimassorb^{®}-Marken der BASF SE. Bevorzugt im gemeinsamen Einsatz mit Säuren sind jedoch solche gehinderten Amine, die N-alkyliert sind, beispielsweise Bis (1,2,2,6,6-pentamethyl-4-piperidinyl)-[[3,5-bis(1,1-dimethylethyl)-4-hydroxyphenyl]-methyl]butylmalonat(z.B. Tinuvin^{®} 144 der BASF SE); eine Mischung aus Bis(1,2,2,6,6-Pentamethyl-4-Piperidinyl)sebacatund Methyl(1,2,2,6,6-Pentamethyl-4-Piperidinyl)sebacat(z.B. Tinuvin^{®} 292 der BASF SE); oder die N-(O-Alkyliert) sind, wie z.B. Dekandisäure,bis(2,2,6,6-tetramethyl-1-(octyloxy)-4-piperidinyl)ester(z.B. Tinuvin^{®} 123 der BASF SE). Die Menge der HALS-Derivaten ist insbesondere abhängig vom HALS-Derivat selber, anderen Komponenten der Beschichtungsmasse, dem gewünschten UV-Schutzumfang und dem Pigmentierungsgrad des Lacks. Bevorzugt sind bei Klarlacken 0,5-1,5 %, halbtransparenten Systemen 0,5-3 %, opaken Systemen 1-6 % bezogen auf den Gesamtansatz.

Als Verdicker kommen neben radikalisch (co)polymerisierten (Co)Polymerisaten, übliche organische und anorganische Verdicker wie Hydroxymethylcellulose oder Bentonit in Betracht. Als Chelatbildner können z.B. Ethylendiaminessigsäure und deren Salze sowie β-Diketone verwendet werden.

Die Mengen von Trockenmittel, antistatischen Agentien, Flammschutzmittel, Verdicker, thixotropen Agentien, oberflächenaktive Agentien (insbesondere Verlaufsadditive, Entschäumer), Viskositätsmodifikatoren (Rheologieadditive), Plastifizierer, Chelatbildner und/oder Dispergiermittel ist u.a. abhängig von den Additiven, der Gesamtformulierung, und insbesondere incl. Komponente (H). Die Menge der Dispergiermittel ist insbesondere abhängig von der Menge und Art der Pigmente, deren aktiven Oberfläche und Vorbehandlung.

Weiterhin können noch als Komponente (H) Füllstoffe, Farbstoffe und/oder Pigmente enthalten sein. Die Stoffe der Komponente (H) können in Abhängigkeit von ihrer Funktion und der übrigen Zusammensetzung der Beschichtungsmasse in üblichen, dem Fachmann bekannten Mengen eingesetzt werden, z.B. von 0 bis 40 Gew.% oder von 1 bis 40 Gew.%., bezogen auf die Gesamtzusammensetzung, fest auf fest.

Als (koloristisch inerte) Füllstoffe sind alle Stoffe bzw. Verbindungen zu verstehen, die einerseits koloristisch unwirksam sind; d.h. die eine geringe Eigenabsorption zeigen und deren Brechzahl ähnlich der Brechzahl des Beschichtungsmediums ist, und die andererseits in der Lage sind, die Orientierung (parallele Ausrichtung) von Effektpigmenten in der Oberflächenbeschichtung, d.h. im applizierten Lackfilm, zu beeinflussen, ferner Eigenschaften der Beschichtung oder der Beschichtungsmassen, beispielsweise Härte oder Rheologie. Im Folgenden sind beispielhaft einsetzbare inerte Stoffe bzw. Verbindungen genannt, ohne jedoch den Begriff koloristisch inerte topologiebeeinflussende Füllstoffe auf diese Beispiele zu beschränken. Geeignete inerte Füllstoffe entsprechend der Definition können beispielsweise transparente oder semitransparente Füllstoffe oder Pigmente sein, wie z.B. Kieselgele, Blancfixe, Kieselgur, Talkum, Calciumcarbonate, Kaolin, Bariumsulfat, Magnesiumsilikat, Aluminiumsilikat, kristallines Siliziumdioxid, amorphe Kieselsäure, Aluminiumoxid, Mikrokugeln oder Mikrohohlkugeln z.B. aus Glas, Keramik oder Polymeren mit Größen von beispielsweise 0,1-50 µm. Weiterhin können als inerte Füllstoffe beliebige feste inerte organische Partikel, wie z.B. Harnstoff-Formaldehyd-Kondensationsprodukte, mikronisiertes Polyolefinwachs und mikronisiertes Amidwachs, einge- setzt werden. Die inerten Füllstoffe können jeweils auch in Mischung eingesetzt werden. Bevor- zugt wird jedoch jeweils nur ein Füllstoff eingesetzt. Bevorzugte Füllstoffe umfassen Silikate, z. B. durch Hydrolyse von Siliciumtetrachlorid erhältliche Silikate wie Aerosil^{®} der Fa. Degussa, Kieselerde, Talkum, Aluminiumsilikate, Magnesiumsilikate, Calciumcarbonate etc.

Farbstoffe sind Farbmittel und unterscheiden sich von den Pigmenten durch ihre Löslichkeit im Anwendungsmedium, d.h. sie weisen bei 25 °C eine Löslichkeit über 1 g / 1000 g im Anwendungsmedium auf. Beispiele für Farbstoffe sind Azo-, Azin-, Anthrachinon-, Acridin-, Cyanin-, Oxazin-, Polymethin-, Thiazin-, Triarylmethan-Farbstoffe. Diese Farbstoffe können Anwendung finden als basische oder kationische Farbstoffe, Beizen-, Direkt-, Dispersions-, Entwicklungs-, Küpen-, Metallkomplex-, Reaktiv-, Säure-, Schwefel-, Kupplungs- oder Substantive Farbstoffe.

Pigmente im eigentlichen Sinne sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel". Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium. Beispiele für Pigmente im eigentlichen Sinne umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepasst werden. Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Me- tallpigmente; wie z.B. Aluminium-, Eisen- oder Kupferpigmente; Interferenzpigmente, wie z.B. titandioxidbeschichteter Glimmer, eisenoxidbeschichteter Glimmer, mischoxidbeschichteter Glimmer (z.B. mit Titandioxid und Fe2O3 oder Titandioxid und Cr2O3), metalloxidbeschichtetes Aluminium, oder Flüssigkristallpigmente. Bei den farbgebenden Absorptionspigmenten handelt es sich beispielsweise um übliche in der Lackindustrie einsetzbare organische oder anorgani- sche Absorptionspigmente. Beispiele für organische Absorptionspigmente sind Azopigmente, Phthalocyanin-, Chinacridon- und Pyrrolopyrrolpigmente. Beispiele für anorganische Absorpti- onspigmente sind Eisenoxidpigmente, Titandioxid und Ruß. Die Menge der Pigmente ist u.a abhängig von ihrer Art und aktiven Oberfläche, der sonstigen Zusammensetzung der Beschich- tungsmasse und dem gewünschten Deckungsgrad. Bei organischen Pigmenten sind Mengen von 10-15 Gew.% üblich, bei anorganischen 30-40 Gew.% bezogen auf die Gesamtformulierung, fest auf fest.

Die erfindungsgemäßen einkomponentigen, lösungsmittelhaltigen Aminoharzbeschichtungsmassen weisen vorzugs- weise eine Stöchiometrie von Aminoharz (A) zur Summe von Polyol (B) und Polyesterpolyol (C) von 1:1 bis 1:9 auf, wobei sich die Daten auf die Komponenten ohne Lösungsmittel, fest auf fest beziehen. Das gleiche gilt für die nachfolgenden Mengenverhältnisse. Die genaue Zusammen- setzung ist abhängig von den Rohstoffkomponenten und der Anwendung. Bei coil- Anwendungen ist ein Mischungsverhältnis um 1:4 bis 1:5 bevorzugt, bei teilweise veretherten Melaminharzen um die 1:1,5 bis 1:4, bevorzugt 1:1,5 bis 1:2,5.

Das Gewichtsverhältnis der Komponenten hydroxylgruppenhaltiges Polymer (B) zu verzweigtem Polyesterpolyol (C) beträgt größer als 1:1, bevorzugt bis 49:1, z.B. von 1,1:1 bis 49:1, besonders bevorzugt von 1,5:1 bis 19:1, insbesondere von 2,3:1 bis 9:1 bezogen auf Feststoffe.

Geeignete Beschichtungsmassen sind z.B. solche, welche die Aufbaukomponenten in folgenden Mengen enthalten:
(A) 100 Gew.-Teile der Aminoharze (bezogen auf Festanteil)
(B) von 45 bis 882 Gew.-Teile, vorzugsweise 70 bis 810 Gew.-Teile der hydroxylgruppenhaltigen Polymere (je bezogen auf Festanteile)
(C) von 2 bis 450, vorzugsweise 10 bis 270 Gew.-Teile der verzweigten Polyesterpolyole (je bezogen auf Festanteile)
(D) optional chemische Vernetzer, Mengen in Abhängigkeit von Typ und System
(E) von 0 bis 80 Gew.%, vorzugsweise von 20 bis 70 Gew %, besonders vorzugsweise 30 bis 60 % organische Lösungsmittel bezogen auf die Summe der Mengen von (A) bis (G)
(F) von 0 bis 10 Gew.-Teile, bevorzugt von 0,1 bis 8 Gew.-Teile, besonders bevorzugt von 0,3 bis 6 Gew.-Teile, ganz besonders bevorzugt von 0,5 bis 5 Gew.-Teile und insbesondere von 1 bis 3 Gew.-Teile Katalysator, bezogen auf das eingesetzte Aminoharz (A) (fest auf fest)
(G) optional lacktypische Additive, Mengen in Abhängigkeit von Typ und System wie oben beschrieben
(H) optional Füllstoffe, Farbstoffe und/oder Pigmente, Mengen in Abhängigkeit von Typ und System.

Die Härtung erfolgt vorzugsweise so, dass man nach der Beschichtung der Substrate mit den Beschichtungsmassen oder Lackformulierungen, bestehend aus Aminoharz (A), hydroxylgruppenhaltigem Polymer (B), verzweigtem Polyesterpolyol (C), optionalen Vernetzern (D), optionalen Lösungsmitteln (E), optionalen Katalysatoren (F), optionalen Additiven (G), optionalen Füllstoffen, Farbstoffen und/oder Pigmenten (H) trocknet und dann härtet. Getrocknet wird vorzugsweise unter sauerstoffhaltigerAtmosphäre, bevorzugt Luft, oder unter Inertgas.

In einer bevorzugten Variante, beispielsweise mit vollständig veretherten Melaminformaldehydharzen, insbesondere Säure-katalysiert, insbesondere für can und coil Anwendungen, wird beispielsweise zwischen 170 bis 300 °C, bevorzugt 200 bis 260 °C Objekttemperatur gehärtet. Die Ofentemperatur kann dabei signifikant höher sein, z.B. bis ca. 400 °C. Die Härtungsdauer kann typischerweise zwischen 10 Sekunden und 10 Minuten erfolgen, abhängig vom Harz und der Anwendung. Härtungstemperatur und Härtungszeit sind tendenziell gegenläufig, z.B. 10-40Sekunden bei 200-260 °C, oder 10 min bei 170-200 °C.

In einer bevorzugten Variante, beispielsweise mit teilweise veretherten Melaminformaldehydharzen für beispielsweise Automobil- und Industrieanwendungen für beispielsweise Klarlacke und pigmentierte Topcoats, kann typisch zwischen 70 und 260 °C, bevorzugt 100 und 180 °C, insbesondere zwischen 120 und 170 °C, besonders bevorzugt zwischen 130 und 150 °Cthermisch behandelt (gehärtet) werden. Die Härtungsdauer kann typischerweise zwischen 5 und 60 Minuten, bevorzugt von 10 bis 40 Minuten, besonders bevorzugt zwischen 20 bis 30 Minuten erfolgen.

Optional wird, insbesondere bei Möbelanwendungen, bei einer Temperatur unter 80°C, bevorzugt von Raumtemperatur (20°C) bis 60 °C und besonders bevorzugt Raumtemperatur bis 40 °C über einen Zeitraum bis zu 72 Stunden, bevorzugt bis zu 24 Stunden, besonders bevorzugt bis 6 Stunden (insbesondere Säure-katalysiert) getrocknet.

In der Trocknung wird im Wesentlichen vorhandenes Lösungsmittel entfernt, darüber hinaus kann auch bereits eine Reaktion mit dem Bindemittel stattfinden, wohingegen die Härtung im Wesentlichen die Reaktion mit dem Bindemittel umfasst.

Die Lackhärtung erfolgt in Abhängigkeit von der Menge an aufgetragenem Beschichtungsstoff und der eingetragenen Vernetzungsenergie über energiereiche Strahlung, Wärmeübergang von beheizten Oberflächen oder über Konvektion von gasförmigen Medien über einen Zeitraum von Sekunden, z.B. bei Bandlackierung in Kombination mit NIR-Trocknung, bis zu 5 Stunden, z.B. Dickschichtsystemen auf temperaturempfindlichen Materialien, meist nicht weniger als 10 min, bevorzugt nicht weniger als 15, besonders bevorzugt nicht weniger als 30 und ganz besonders bevorzugt nicht weniger als 45 min. Die Härtung kann auch zusätzlich oder anstelle der thermisehen Härtung durch IR- und NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist.

Gegenstand der Erfindung ist auch ein Verfahren zum Beschichten von Substraten, dadurch gekennzeichnet, dass man Aminoharz (A) und Polymer (B) und Polyesterpolyol (C), wie vorstehend definiert, in einem Gewichtsverhältnis von (A) gegenüber der Summe von (B) und (C) von vorzugsweise 1:1 bis 1:9 miteinander vermischt, wobei optional noch weitere Komponenten (D) bis (H) eingemischt werden können, und man anschließend auf das Substrat aufträgt. Die Beschichtung derSubstrate mit den erfindungsgemäßen Beschichtungsmassen erfolgt nach üblichen, dem Fachmann bekannten Verfahren, wobei man wenigstens eine erfindungsgemäße Beschichtungsmasse oder Lackformulierung auf das zu beschichtende Substrat in der gewünschten Stärke aufbringt und die flüchtigen Bestandteile der Beschichtungsmasse, gegebenenfalls unter Erhitzen, entfernt (Trocknen). Dieser Vorgang kann gewünschtenfalls ein- oder mehrfach wiederholt werden. Das Aufbringen auf das Substrat kann in bekannter Weise, z.B. durch Spritzen, Spachteln, Rakeln, Bürsten, Rollen, Walzen oder Gießen erfolgen. Die Dicke einer solchen zu härtenden Schicht kann von 0,1 µm bis mehrere mm betragen, bevorzugt von 1 bis 2.000 µm, besonders bevorzugt 5 bis 200 µm, ganz besonders bevorzugt von 5 bis 60 µm (bezogen auf den Lack imZustand in dem das Lösungsmittel aus dem Lack entfernt ist). Für Coil-Coating mit HMMM-Harzen sind 2 bis 20 µm typische Lackschichtdicken, für Automobil- Anwendungen mit teilmethylolierten Aminoharzen Schichtdicken vorzugsweise bis ca. 50 µm.

Geeignete Substrate für die erfindungsgemäßen Beschichtungsmassen sind beispielsweise Kunststoff-Substratewiez.B. thermoplastische Polymere, insbesondere Polymethylmethacrylate, Polybutylmethacrylate, Polyethylenterephthalate, Polybutylenterephthalate, Polyvinylidenfluoride, Polyvinylchloride, Polyester, Polyolefine, Acrylnitrilethylenpropylendienstryolcopolymere (A-EPDM), Polyetherimide, Polyetherketone, Polyphenylensulfide, Polyphenylenetheroderderen Mischungen. Weiterhin genannt seien Polyethylen, Polypropylen, Polystyrol, Polybutadien, Polyester, Polyamide, Polyether, Polycarbonat, Polyvinylacetal, Polyacrylnitril, Polyacetal, Polyvinylalkohol, Polyvinylacetat, Phenolharze, Harnstoffharze, Melaminharze, Alkydharze, Epoxidharze oder Polyurethane, deren Block- oder Pfropfcopolymere und Blends davon. Bevorzugt als Kunststoff-Substrate genannt seien ABS, AES, AMMA, ASA, EP, EPS, EVA, EVAL, HDPE, LDPE, MABS, MBS, MF, PA, PA6, PA66, PAN, PB, PBT, PBTP, PC, PE, PEC, PEEK, PEI, PEK, PEP, PES, PET, PETP, PF, PI, PiB, PMMA, POM, PP, PPS, PS, PSU, PUR, PVAC, PVAL, PVC, PVDC, PVP, SAN, SB, SMS, UF, UP-Kunststoffe (Kurzzeichen gemäß DIN 7728) und aliphatische Polyketone. Besonders bevorzugte Kunststoff-Substrate sind Polyolefine, wie z.B. PP (Polypropylen), das wahlweise isotaktisch, syndiotaktisch oder ataktisch und wahlweise nicht-orientiert oder durch uni- oder bisaxiales Recken orientiert sein kann, SAN (Styrol-Acrylnitril-Copolymere), PC (Polycarbonate), PVC (Polyvinylchloride), PMMA (Polymethylmethacrylate), PBT (Poly(butylenterephthalat)e), PA (Polyamide), ASA (Acrylnitril-Styrol-Acrylester-Copolymere) und ABS (Acrylnitril-Butadien-Styrol-Copolymere), sowie deren physikalische Mischungen (Blends). Besonders bevorzugt sind PP, SAN, ABS, ASA sowie Blends von ABS oder ASA mit PA oder PBT oder PC. Ganz besonders bevorzugt sind Polyolefine, PMMA und PVC. Ganz besonders bevorzugte Kunststoff-Substrate sind ASA, insbesondere gemäß DE 196 51 350 und der Blend ASA/PC. Bevorzugt ist ebenfalls Polymethylmethacrylat (PMMA) oder schlagzähmodifiziertes PMMA.

Ein bevorzugtes Substrat zur Beschichtung mit den erfindungsgemäßen Beschichtungsmassen sind Metalle, die gegebenenfalls mit einem (Haft-)Primer oder einer anderen Lackschicht vorbehandelt sein können. Bei der Art des Metalls kann es sich im Prinzip um beliebige Metalle handeln. Insbesondere handelt es sich aber um solche Metalle oder Legierungen, welche üblicherweise als metallische Konstruktionswerkstoffe eingesetzt werden, und die vor Korrosion geschützt werden müssen.

Insbesondere handelt es sich um Oberflächen von Eisen, Stahl, Zink, Zink-Legierungen, Aluminium oder Aluminiumlegierungen. Es kann sich dabei um die Oberflächen von vollständig aus den besagten Metallen bzw. Legierungen bestehenden Körpern handeln. Die Körper können aber auch nur mit diesen Metallen beschichtet sein und selbst aus andersartigen Materialien bestehen, beispielsweise aus anderen Metallen, Legierungen, Polymeren oder Verbundwerkstoffen. Es kann sich um Oberflächen von Gussteilen, aus verzinktem Eisen oder Stahl handeln. In einer bevorzugten Ausführungsform der vorliegenden Erfindung handelt es sich um Stahloberflächen.

Zn- oder Al-Legierungen sind dem Fachmann bekannt. Je nach dem gewünschten Anwendungszweck wählt der Fachmann Art und Menge von Legierungsbestandteilen aus. Typische Bestandteile von Zink-Legierungen umfassen insbesondere Al, Pb, Si, Mg, Sn, Cu oder Cd. Typische Bestandteile von Aluminium-Legierungen umfassen insbesondere Mg, Mn, Si, Zn, Cr, Zr, Cu oder Ti. Es kann sich auch um Al/Zn-Legierungen handeln, bei denen Al- und Zn in annähernd gleicher Menge vorhanden sind. Mit derartigen Legierungen beschichteter Stahl ist kommerziell erhältlich. Der Stahl kann die üblichen, dem Fachmann bekannten Legierungskomponenten enthalten.

Bevorzugt ist auch die Anwendung der erfindungsgemäßen Beschichtungsmassen zur Behandlung von, gegebenenfalls vorbehandelt verzinktem, insbesondere feuerverzinktem Eisen/Stahl (Weißblech) oder Aluminium, insbesondere für coil-Anwendungen.

Die erfindungsgemäßen Beschichtungsmassen und Lackformulierungen eignen sich weiterhin zum Beschichten von Substraten wie Holz, Holzfurnier, Papier, Pappe, Karton, Textil, Folie, Leder, Vlies, Kunststoffoberflächen, Glas, Keramik, mineralischen Baustoffen, wie Zement-Formsteine und Faserzementplatten, oder Metallen, wobei die Substrate jeweils optional vorbeschichtet bzw. vorbehandelt sein können. Bevorzugt sind Metalle und Kunststoffe, die optional vorbeschichtet oder vorbehandelt sein können.

Die erfindungsgemäßen Beschichtungsmassen oder Lackformulierungen eignen sich als in Innen- oder Außenbeschichtungen, also solche Anwendungen, die dem Tageslicht ausgesetzt sind, bevorzugt von Gebäudeteilen, Beschichtungen auf Fahrzeugen und Flugzeugen. Insbesondere werden die erfindungsgemäßen Melamin-Formaldehyd-Harze und Beschichtungsmassen als oder in Automobil-klar- und -decklacke(n) eingesetzt. Weitere bevorzugte Einsatzgebiete sind Can-Coating und Coil-Coating. Besonders eignen sie sich als Grundierungen, Füller, pigmentierte Decklacke und Klarlacke im Bereich Industrie-, Holz-, Auto-, insbesondere OEM-Lackierumg, oder Dekolackierung. Ganz besonders geeignet sind die Beschichtungsmittel für Anwendungen, in denen eine besonders hohe Applikationssicherheit, Außenwitterungsbestän- digkeit, Optik, Lösemittel- und/oder Chemikalienfestigkeit gefordert werden, insbesondere wenn eine hohe Chemikalienbeständigkeit, ein gutes Verhältnis von Härte zu Elastizität und schnelle
Trocknung gefordert sind.

Weiterhin sind auch Substrate, beschichtet mit einer erfindungsgemäßen Beschichtungsmasse Gegenstand der vorliegenden Erfindung.

### Beispiele

### Einsatzstoffe der Beispiele:

| | |
|---|---|
| Hexahydrophthalsäureanhydrid | Fa. Aldrich. Smp. 33 °C. Wird vor dem Einsatz im Ofen auf geschmolzen |
| Adipinsäuredimethylester | Aldrich. Flüssig |
| Trimethylolpropan | Aldrich. Weiße Schuppen, Schmelzpunkt 56-58°C |
| Neopentylglykol | Feststoff, Smp. 127 °C |
| 2-Butyl-2-ethyl-1,3-propandiol | Fa. TCI (Tokyo Chemical Industry). Schmelzpunkt 43°C, wird vor dem Einsatz im Wasserbad aufgeschmolzen |
| Joncryl^{®} 504: | Polyacrylatol, OH-Zahl 140 mg KOH/g, 80 % Feststoffgehalt in Xylol; BASF SE, Ludwigshafen |
| Dynapol^{®} LH 832-02 | Verzweigtes Polyesterpolyol, 60 % in Solvent Naphtha 150 / Butylglykol |
| Luwipal^{®} 018: | n-Butanol verethertes Melamin-Formaldehyd-Harz in n-Butanol insbesondere für Automobilanwendungen. 73 % nfA (2 g/2 h/125 °C). 5,5 Pa*s (23 °C). BASF SE |
| Luwipal^{®} 066 LF: | Methanol verethertes Melamin-Formaldehyd-Harz in Methanol (HMMM-Harz). 94,5 % nfA (2 g/2 h/125 °C). 4,0 Pa*s (23 °C). BASF SE |
| Nacure^{®} 2500: | Amin-neutralisierte para-Toluolsulfonsäure. Blockierter Katalysator. King Industries |
| Nacure^{®} 2558: | Blockierte para-Toluolsufonsäure |
| Solvenon^{®} PM | 1-Methoxy-propan-2-ol, Lösungsmittel, BASF SE |
| Solvesso^{®} 150 | ExxonMobil Chemical, aromatisches Lösungsmittel, Sdp. 180-193 °C |

Die Bestimmung von Hydroxylzahlen der verzweigten Polyesterole basiert auf DIN 53240-2:2007-11. Bei der Berechnung wird die Säurezahl berücksichtigt.

Die Bestimmung von Säurezahlen der verzweigten Polyesterole erfolgt gemäß DIN EN ISO 2114:2000, Verfahren A.

Die Angaben zur Polydispersität sowie zum zahlenmittleren und gewichtsmittleren Molekulargewicht Mₙ und M_{w} beziehen sich hier, sofern nichts anderes angegeben ist, auf gelpermeationschromatographische Messungen, wobei Polymethylmethacrylat als Standard und Tetrahydrofuran als Elutionsmittel verwendet wurden mit den in den Beispielen genannten Parametern. Die Bestimmung der Molmassen und Polydispersitäten erfolgt durch Gelpermeationschromatographie mit TÜV-zertifizierten PMMA-Standardsvon PSS (Polymer Standards Service; DIN EN ISO 9001:2000, Zertifikat: 01 100 84065.). Diese Standards sind nach den Anforderungen von DIN 55672 und ISO/EN 13885 charakterisiert.

Die GPC erfolgt mit:
Gerät: PSS Agilent Technologies 1260 ₁nfinity
Säulen:
   1x PLGel Mixed E Guard (Vorsäule), Länge 5 cm, Durchmesser 0,75 cm
   1x PLGel Mixed E, Länge 30 cm, Durchmesser 0,75 cm
   1x PLGel Resipore, Länge 30 cm, Durchmesser 0,75 cm
Lösungsmittel: THF
Flussrate: 1 ml/min
Injektionsvolumen:50 µL
Konzentration: 1 g/L
Temperatur: Raumtemperatur (20 °C)

Die Glasübergangstemperatur T_{g}, wird in dieser Schrift, wenn nicht anders angegeben, gemäß ASTM-Vorschrift 03418-03 über Differential Scanning Calorimetry (DSC), mit einer Aufheizrate von 10 °C/min bestimmt.

Viskositäten werden in dieser Schrift bei 23 °C gemäß DIN EN ISO 3219/A.3 in einem Kegel-Platte-System mit einem Geschwindigkeitsgefälle von 1000 s⁻¹ angegeben, falls nicht anders vermerkt.

Der Nicht-flüchtige Anteil (nfA) wurde nach thermo-gravimetrischem Prinzip mithilfe eines Moisture Analyzer HB43-S der Firma Mettler Toledo bestimmt. Dazu wurden etwa 2 g der Probe in eine Aluminium-Probenschale mit einem Durchmesser von 90 mm (HA-090) eingewogen und bis zur Gewichtskonstanz auf 150 °C aufgeheizt.

### Synthesebeispiele:

In Laborversuchen wurden Trimethylolpropan und Neopentylglykol im Reaktor als Feststoff vorgelegt. Hexahydrophthalsäureanhydrid und 2-Butyl-2-ethyl-1,3-propandiol wurden im aufgeschmolzenen Zustand zugegeben

### Beispiel B1:

### Hexahydrophthalsäureanhydrid / Trimethylolpropan / Neopentylglykol = 1,0:0,5:0,5

In einem Vierhalskolben mit Rückflusskühler und Wasserauskreiserwurden Trimethylolpropan (490,9 g), Neopentylglykol (381,0 g) und Hexahydrophthalsäureanhydrid (1128,1 g) in Stickstoffatmosphäre vorgelegt und unter Rühren auf 160-180 °C erhitzt. Nach einer Reaktionszeit von 5 h und nach Erreichen einer Säurezahl von 85 mg KOH/g (Umsatz 80 %) wurde auf 120 °C abgekühlt, 631,3 g Butylacetat zugegeben und weiter abgekühlt.

### Beispiel B2:

### Hexahydrophthalsäureanhydrid / Trimethylolpropan = 1,2 : 1,0

In einem Vierhalskolben mit Rückflusskühler und Wasserauskreiserwurden Trimethylolpropan (840,8 g) und Hexahydrophthalsäureanhydrid (1159,2 g) in Stickstoffatmosphäre vorgelegt und unter Rühren auf 160-180 °C erhitzt. Nach einer Reaktionszeit von 5 h und nach Erreichen einer Säurezahl von 83 mg KOH/g (Umsatz 81 %) wurde auf 120 °C abgekühlt, 1017,1 g Butylacetat zugegeben und weiter abgekühlt.

### Beispiel B3:

In einem Vierhalskolben mit Wasserauskreiserwurden Trimethylolpropan (930,7 g) und Hexahydrophthalsäureanhydrid (1069,3 g) in Stickstoffatmosphäre bei Raumtemperatur vorgelegt, vollständig aufgeschmolzen und unter Rühren stufenweise auf 160-180 °C erhitzt. Nach einer Reaktionszeit von ca. 5 h und nach Erreichen einer Säurezahl von 74 mg KOH/g (Umsatz 82 %) wurde auf 120 °C abgekühlt, 814 g Butylacetat zugegeben und weiter abgekühlt.

### Beispiel B4:

### Hexahydrophthalsäureanhydrid/Trimethylolpropan/Adipinsäuredimethylester= 1,0:1,5:0,5 mit Tetrabutylorthotitanat als Katalysator

In einem Vierhalskolben mit Wasserauskreiserwurden Trimethylolpropan (778,0 g), Hexahydrophthalsäureanhydrid (596,0 g) und Tetrabutylorthotitanat (0,5 g) in Stickstoffatmosphäre vorgelegt und unter Rühren auf 160-180 °C erhitzt. Nach einer Reaktionszeit von 10 h und Erreichen einer Säurezahl von 42 mg KOH/g wurde bei 140 °C Adipinsäuredimethylester (337,0 g) zugegeben. Nach weiteren 10 h bei 180 °C und einer erreichten Säurezahl von 22 mg KOH/g wurde auf 120 °C abgekühlt, 511,0 g Butylacetat zugegeben und weiter abgekühlt.

### Beispiel B5:

### Hexahydrophthalsäureanhydrid/Trimethylolpropan/2-Butyl-2-ethyl-1,3-propandiol= 1,2:0,8:0,2

In einem Vierhalskolben mit Rückflusskühlerund Wasserauskreiserwurden Trimethylolpropan (330,9 g), aufgeschmolzenes2-Butyl-2-Ethyl-1,3-Propandiol (98,8 g) und Hexahydrophthalsäureanhydrid (570,3 g) in Stickstoffatmosphäre vorgelegt und unter Rühren auf 160-180 °C erhitzt. Nach einer Reaktionszeit von 5 h und nach Erreichen einer Säurezahl von 98 mg KOH/g (Umsatz 78 %) wurde auf 120 °C abgekühlt, 407,0 g Butylacetat zugegeben und weiter abgekühlt.

### Beispiel B6:

### Hexahydrophthalsäureanhydrid / Trimethylolpropan = 1,1:1,0

In einem Vierhalskolben mit Rückflusskühler und Wasserauskreiser wurden Trimethylolpropan (530,1 g) und Hexahydrophthalsäureanhydrid (669,9 g) in Stickstoffatmosphäre vorgelegt und unter Rühren auf 160-180 °C erhitzt. Nach einer Reaktionszeit von 5 h und nach Erreichen einer Säurezahl von 77 mg KOH/g (Umsatz 82 %) wurde auf 120 °C abgekühlt, 283,3 g Butylacetat zugegeben und weiter abgekühlt.

### Beispiel B7:

### Hexahydrophthalsäureanhydrid / Trimethylolpropan = 1,0:1,0 (mit niedrigerer Säurezahl)

In einem Vierhalskolben mit Wasserauskreiser wurden Trimethylolpropan (930,7 g) und Hexahydrophthalsäureanhydrid (1069,3 g) in Stickstoffatmosphäre vorgelegt und unter Rühren auf 160 °C erhitzt. Diese Temperatur wurde ca. 30 min gehalten, danach auf 180 °C hochgeheizt. Nach einer Reaktionszeit von ca. 10 h und nach Erreichen einer Säurezahl von 54 mg KOH/g wurde auf 120 °C abgekühlt und das Produkt mit Butylacetat auf 75% verdünnt und weiter abgekühlt.

### Beispiel B8:

### Hexahydrophthalsäureanhydrid / Trimethylolpropan = 1,0:1,0 (mit niedrigerer Säurezahl)

In einem Vierhalskolben mit Wasserauskreiserwurden Trimethylolpropan (465,3 g) und Hexahydrophthalsäureanhydrid (534,7g) in Stickstoffatmosphäre vorgelegt und unter Rühren auf 160 °C erhitzt. Diese Temperatur wurde ca. 30 min gehalten, danach auf 180 °C hochgeheizt. Nach einer Reaktionszeit von ca. 8 h und nach Erreichen einer Säurezahl von 46 mg KOH/g wurde auf 120 °C abgekühlt und das Produkt mit 288,4 g Butylacetat auf 70% verdünnt und weiter abgekühlt.

### Beispiel B9:

### Hexahydrophthalsäureanhydrid/Trimethylolpropan/2-Butyl-2-Ethyl-1,3-Propandiol= 1,0:0,5:0,5

In einem Vierhalskolben mit Wasserauskreiserwurden Trimethylolpropan (22,6 g), 2-Butyl-2-ethyl-1,3-propandiol (265,90g) und Hexahydrophthalsäureanhydrid (511,5 g) in Stickstoffatmosphäre vorgelegt und unter Rühren auf 160 °C erhitzt. Diese Temperatur wurde ca. 30 min gehalten, danach auf 180 °C hoch geheizt. Nach einer Reaktionszeit von ca. 4 h und nach Erreichen einer Säurezahl von 86 mg KOH/g wurde auf 120 °C abgekühlt und das Produkt mit 229,3 g Butylacetat auf 75% verdünnt und weiter abgekühlt.

### Beispiel B10:

### Hexahydrophthalsäureanhydrid / Trimethylolpropan / Neopentylglykol = 2:1,67:1

In einem Vierhalskolben mit Wasserauskreiser wurden Trimethylolpropan (352,0 g), Neopentylglykol (163,6g) und Hexahydrophthalsäureanhydrid (484,4g) in Stickstoffatmosphäre vorgelegt und unter Rühren auf 160 °C erhitzt. Diese Temperatur wurde ca. 30 min gehalten, danach auf 180 °C hochgeheizt. Nach einer Reaktionszeit von ca. 9 h und nach Erreichen einer Säurezahl von 41 mg KOH/g wurde auf 160 °C abgekühlt und für 3 1/2 Stunden Vakuum von 200 mbar angelegt. Danach betrug die Säurezahl 35 mg KOH/g. Das Produkt wurde auf 120°C abgekühlt und mit 284,64 g Butylacetat auf 70% verdünnt und weiter abgekühlt.

### Beispiel B11:

### Hexahydrophthalsäureanhydrid / Trimethylolpropan / Neopentylglykol = 2:1:1,27

In einem Vierhalskolben mit Wasserauskreiser wurden Trimethylolpropan (267,6 g), Neopentylglykol (219,9g) und Hexahydrophthalsäureanhydrid (512,5g) in Stickstoffatmosphäre vorgelegt und unter Rühren auf 160 °C erhitzt. Diese Temperatur wurde ca. 30 min gehalten, danach auf 180 °C hochgeheizt. Nach einer Reaktionszeit von ca. 2 1/2 h und nach Erreichen einer Säurezahl von 62 mg KOH/g wurde auf 160 °C abgekühlt und für 1 Stunde Vakuum von 200 mbar angelegt. Danach betrug die Säurezahl 42 mg KOH/g. Das Vakuum wurde weggenommen, Produkt wurde auf 120°C abgekühlt und mit 285,3 g Butylacetat auf 70% verdünnt und weiter abgekühlt. Unter Vakuum hatte sich etwas Sublimat im Kühler gebildet.

Die Beispiele B sind in Tabelle 1 zusammengefasst.

**Tabelle 1: Polyesterpolyole Beispiele B**

| | OHZ | SZ | Mn | Mw | PDI | Tg | Kat. | Visko | NfA |
|---|---|---|---|---|---|---|---|---|---|
| | mg KOH/g | | D | D | | °C | | mPa*s | % |
| B1 | 191 | 85 | 1032 | 1438 | 1,4 | 17 | keiner | 4540 | 75 |
| B2 | 188 | 83 | 1483 | 3310 | 2,2 | 47 | keiner | 3010 | 65 |
| B3 | 257 | 74 | 1133 | 1780 | 1,6 | 24 | keiner | 4010 | 70 |
| B4 | 250 | 22 | 1798 | 5339 | 3,0 | 4 | TBOT | 4830 | 75 |
| B5 | 158 | 98 | 1255 | 2112 | 1,7 | 35 | keiner | 4720 | 70 |
| B6 | 219 | 77 | 1176 | 2701 | 2,3 | 41 | keiner | 3110 | 80 |
| B7 | 254 | 49 | 1568 | 3709 | 2,4 | 36 | keiner | | 75 |
| B8 | 239 | 44 | 1764 | 5310 | 3,0 | | keiner | 25040 | 73,7 |
| B9 | 162 | 83 | 1030 | 1433 | 1,4 | 12 | keiner | 21500 | 75 |
| B10 | 271 | 33 | 1136 | 1589 | 1,4 | 20 | keiner | 5220 | 70 |
| B11 | 198 | 42 | 1212 | 1886 | 1,6 | 23 | keiner | 7530 | 70 |

| | | | | | | | | | |
|---|---|---|---|---|---|---|---|---|---|
| PDI: Polydispersität; SZ: Säurezahl; OHZ: OH-Zahl; Visk: Viskosität; Kat.: Katalysator nfA: Nicht-flüchtiger Anteil | | | | | | | | | |

### Beschichtungsmassen und Anwendungstechnische Vergleichsversuche:

Es wurden die folgenden Eigenschaften getestet:
Die Pendelhärte wurde nach König auf Glasplatten (isotherm) oder -Tiefziehblech (Gradientenofen 80-180 °C) bestimmt (DIN EN ISO 1522)

Der Vernetzungsdichteaufbau (Chemikalienbeständigkeit) wurde zum einen durch den Methylethylketon (MEK)-Doppelhubtest, basierend auf 01N EN 13523-11 und ASTM 05402-06, auf einem Bonderblech bestimmt. Dies erfolgte an einem Crockmeter-Gerät mit 7 Newton Kraft bis zur Zerstörung des Lacks mit Doppelhüben. Alle 50 Doppelhübe wurde der Filz mittels Spritze durch das Röhrchen von oben mit MEK befeuchtet. Filzeinsätze sind für das Ritzhärteprüfgerät LINEARTESTER 249 der Firma Erichsen.

Der Vernetzungsdichteaufbau (Chemikalienbeständigkeit) wurde zum anderen durch den Xylol-Test auf einem Tiefziehblech nach Härtung in einem Gradientenofen bei 80-180 °C und 24 Stunden bei einer Filmschichtdicke von 40-50 µm bestimmt. Dazu wurde das Tiefziehblech 10 Minuten halb in ein Xylol-Bad getunkt, danach erst mit einem Tuch abgerieben und dann mit einem Holzspatel darauf gekratzt um ungehärtete oder untergehärtete Lackflächen zu entfernen.

| | |
|---|---|
| 0 % Härtung: | Der Lack wird durch Xylol gelöst oder lässt sich mit dem Tuch abwischen |
| 50 % Härtung: | Der Lack wird durch Xylol und Tuch nicht entfernt, kann aber durch den Holzspatel abgekratzt werden |
| 100 % Härtung: | Der Lack wird auch durch den Holzspatel nicht entfernt |

Die Messflächen auf dem Gradientenofen sind ca. 10 °C-weise gestuft. Es wurde jeweils die Temperatur angegeben, bei der erstmals eine 50 oder 100 %-ige Härtung gemessen wurden.

### Die Erichsen-Tiefung wurde nach DIN EN ISO 1520 auf einem Tiefziehblech ermittelt

Zur Bestimmung der Chemikalienbeständigkeit für Automobilanwendungen wurde ein lackiertes Tiefziehblech (Gradientenofenblech) 20 Minuten bei 140 °C und 16-24 h bei (23 ± 2) °C und (50 ± 10) % Luftfeuchte gehärtet. Danach wurden mit einer Eppendorf-Pipette pro Heizelement (30-75 °C) Tropfen der Testsubstanzen Schwefelsäure (1%ig; 25 µl), Natronlauge (1%ig; 25µl), Pankreatin (50 µl) und Baumharz (25 µl) aufgegeben. Bei den letzten zwei Agenzien wurde jedes zweite Heizelement übersprungen. Anschließend wurde das Prüfblech in den Gradientenofen (Fa. BYK Gardner) gelegt und 30 Minuten bei 30-75 °C temperiert. Nach Beendigung dieses Vorgangs wurde das Blech mit VE-Wasser von der Schwefelsäure und der Natronlauge gereinigt. Anschließend wurde das Blech mit warmem Wasser und einem weichen Tuch vom anhaftenden Pankreatin gereinigt. Danach wurde das Baumharz mit einem weichen Lappen und Waschbenzin gründlich, jedoch schonend gereinigt. Das Blech wurde abschließend mit kaltem Wasser gründlich jedoch schonend abgewaschen und die restlichen Wassertropfen mit einem weichen Papiertuch entfernt. Nach 24 h Konditionierung bei 23 ± 2 °C und 50 ± 10 % Luftfeuchte erfolgte die Beurteilung. Es wurde die Temperatur notiert, bei welcher der erste Angriff auf die Beschichtung unter künstlichem Licht erkennbar ist.
Quelle des Baumharzes Fa. Wörwag, Baumharzlösung DBL 5416 Nr.: 701014
Pankreatin (Fa. Merck. Art. 7130) wird mit VE-Wasser 1:1 Gew.% in einem Porzellanmörser gemischt.

Der Impact und Re-impact-Test wurde nach DIN EN ISO 6272-1 bestimmt. Bei dem Schlagprüfungsgerät (Impact-Tester) wurde ein Fallgewicht von vier Pfund und einer Halbkugel von 20 mm Durchmesser verwendet.

Die Bleistifthärte wurde nach 01N EN 13523-4 mit einem Satz Bleistifte von Cretacolor- oder Faber Castell (Bereich: 6 B - 6 H) bestimmt.

### Versuchsreihe 1: Pendelhärte mit Joncryl^{®} 504

Vergleich von Mischungen von Polyacrylatol / erfindungsgemäßen Polyesterpolyolen B1-B4 gegenüber Polyacrylatol Joncryl^{®} 504 ohne erfindungsgemäße Polyesterpolyole in der Pendelhärteentwicklung bei 100 °C über eine Härtungszeit von 10 bis 60 Minuten in einem System Polyole/Luwipal^{®} 018 = 7:3 fest/fest. Luwipal^{®} 018 ist ein Aminoharz welches typischerweise in Automobillack-Klarlacken Anwendung findet. Die Mischungsverhältnisse Joncryl^{®} 504 / Polyesterpolyol betrugen "10:0" (Referenz); 9:1; 8:2. 7:3 fest/fest. Filme wurden auf 150 µm nass mit einem Kastenrakel auf Glasplatten appliziert. Die flash-off Zeit betrug 10 Minuten. Trockenfilmschichtdicken nach der Härtung bei 100 °C betrugen ca. 40 µm. Die Pendelhärtemessung erfolgte nach 5-10 Minuten. Bei allen vier Polyesterpolyolen in den jeweils drei Mischungen (9:1; 8:2. 7:3) sind die Pendelhärten über die gesamte Härtungszeit höher als ohne Polyesterpolyol (10:0). Je mehr Polyesterpolyol in der Mischung eingesetzt wurden, desto höher die Pendelhärten.

**Tabelle 2: Formulierungen zu den Pendelhärten der Versuchsreihe 1**

| *(X*/*S* = Xylol / Solvenon^{®} PM. Nacure^{®} 2500 ist 1 % auf Aminoharz fest/fest) | | | | | | | | |
|---|---|---|---|---|---|---|---|---|
| Komponente | NfA | Joncryl^{®} 504 Referenz | Joncryl^{®} 504/B1 | | | Joncryl^{®} 504/B2 | | |
| [g] | % | 10:0 | 9:1 | 8:2 | 7:3 | 9:1 | 8:2 | 7:3 |
| Joncryl^{®} 504 | 80,0 | 52,5 | 47,3 | 42,0 | 36,8 | 47,3 | 42,0 | 36,8 |
| Luwipal^{®} 018 | 72,7 | 24,8 | 24,8 | 24,8 | 24,8 | 24,8 | 24,8 | 24,8 |
| B1 | 75,0 | | 5,6 | 11,2 | 16,8 | | | |
| B2 | 65,0 | | | | | 6,5 | 12,9 | 19,4 |
| *X*/*S*= 7:3 | | 22,8 | 22,3 | 22,0 | 21,6 | 21,4 | 20,3 | 19,0 |
| Nacure^{®} 2500 | 25,0 | 0,72 | 0,72 | 0,72 | 0,72 | 0,72 | 0,72 | 0,72 |

| Komponente | NfA | Joncryl^{®} 504/B3 | | | Joncryl^{®} 504/B4 | | | |
|---|---|---|---|---|---|---|---|---|
| | % | 9:1 | 8:2 | 7:3 | 9:1 | 8:2 | 7:3 | |
| Joncryl^{®} 504 | 80,0 | 47,3 | 42,0 | 36,8 | 47,3 | 42,0 | 36,8 | |
| Luwipal^{®} 018 | 72,7 | 24,8 | 24,8 | 24,8 | 24,8 | 24,8 | 24,8 | |
| B3 | 70,0 | 6,0 | 12,0 | 18,0 | | | | |
| B4 | 75,0 | | | | 5,6 | 11,2 | 16,8 | |
| *X*/*S*= 7:3 | | 21,9 | 21,2 | 20,4 | 22,3 | 22,0 | 21,6 | |
| Nacure^{®} 2500 | 25,0 | 0,72 | 0,72 | 0,72 | 0,72 | 0,72 | 0,72 | |

**Tabelle 3: Pendelhärten in Schlägen bei der Versuchsreihe 1**

| Komponente | 10 min | 20 min | 30 min | 40 min | 50 min | 60 min |
|---|---|---|---|---|---|---|
| Joncryl 504, Referenz | 3 | 18 | 27 | 34 | 42 | 53 |
| Joncryl 504/B1 = 9:1 | 8 | 29 | 39 | 48 | 54 | 68 |
| Joncryl 504/B1 = 8:2 | 10 | 37 | 59 | 69 | 76 | 86 |
| Joncryl 504/B1 = 7:3 | 17 | 50 | 73 | 83 | 90 | 99 |
| Joncryl 504/B2 = 9:1 | 4 | 28 | 47 | 54 | 64 | 73 |
| Joncryl 504/B2 = 8:2 | 14 | 44 | 64 | 73 | 80 | 88 |
| Joncryl 504/B2 = 7:3 | 35 | 66 | 79 | 91 | 96 | 102 |
| Joncryl 504/B3 = 9:1 | 3 | 23 | 40 | 50 | 57 | 66 |
| Joncryl 504/B3 = 8:2 | 12 | 40 | 63 | 71 | 74 | 88 |
| Joncryl 504/B3 = 7:3 | 25 | 63 | 81 | 88 | 93 | 100 |
| Joncryl 504/B4 = 9:1 | 1 | 18 | 26 | 38 | 43 | 55 |
| Joncryl 504/B4 = 8:2 | 1 | 19 | 32 | 42 | 50 | 60 |
| Joncryl 504/B4 = 7:3 | 2 | 25 | 43 | 45 | 59 | 68 |

### Versuchsreihe 2: Lackeigenschaften über die Temperatur mit Joncryl^{®} 504

Vergleich von Mischungen von Polyacrylatol Joncryl^{®} 504 / erfindungsgemäßen Polyesterolen B1-B4 gegenüber Polyacrylatol Joncryl^{®} 504 ohne erfindungsgemäßes Polyesterpolyol in der Pendelhärteentwicklung, Erichsen-Tiefung und Vernetzungsdichte in einem System Polyole/Luwipal^{®} 018 = 7:3 fest/fest. Die Mischungsverhältnisse Joncryl^{®} 504 / Polyesterpolyol betrugen 9:1; 8:2. 7:3 fest/fest. Filme wurden 150 µm nass mit einem Kastenrakel auf einem Tiefziehblech für den Gradientenofen appliziert. Die Härtung erfolgte nach 10 Minuten flash-off in einem Temperaturgradienten von 80-180 °C für20 Minuten und Lagerung über Nacht bei (23 ± 2) °C und (50 ± 10) % Luftfeuchte. Die Trockenfilmdicken betrugen 40-50 µm.

Die Pendelhärten mit verzweigtem Polyesterpolyol sind leicht bis deutlich besser als ohne. Je höher der Anteil an Polyesterpolyol desto besser. Die Erichsen-Tiefung ist im Mittel bei den Einstellungen von B1 unsystematisch bei der 90:10-Mischung etwas schlechter, der 80:20 Mischung deutlich besser, der 70:30-Mischung vergleichbar; bei B2 und B3 im Mittel identisch zur Referenz, bei B4 deutlich besser. Betrachtet man Pendelhärte und Erichsen-Tiefung zusammen, so sind die erfindungsgemäßen Polyesterpolyole ein Gewinn. Die Vernetzungsdichte ist in Abmischungen aller vier Polyesterpolyolen besser als ohne.

**Tabelle 4: Joncryl^{®} 504/B1: Pendelhärten und Erichsen-Tiefung**

| T | Pendelhärte [Schläge] | | | | Erichsen-Tiefung [mm] | | | |
|---|---|---|---|---|---|---|---|---|
| [OC] | Joncryl^{®} 504 Referenz | 9:1 | 8:2 | 7:3 | J. 504 | 9:1 | 8:2 | 7:3 |
| 80 | klebt | klebt | klebt | klebt | 10 | 10 | 10 | 10 |
| 89 | klebt | 3 | 4 | 13 | 10 | 10 | 10 | 10 |
| 100 | 17 | 27 | 34 | 42 | 10 | 10 | 10 | 9,8 |
| 109 | 50 | 66 | 70 | 81 | 9,4 | 8,9 | 10 | 9 |
| 120 | 90 | 95 | 103 | 104 | 7,4 | 7,2 | 9,2 | 7,5 |
| 132 | 109 | 112 | 118 | 123 | 5,5 | 4,5 | 7,7 | 5,9 |
| 143 | 115 | 115 | 122 | 129 | 3,2 | 3,3 | 5,7 | 3,5 |
| 157 | 119 | 121 | 124 | 130 | 1,9 | 1,8 | 3,2 | 2,3 |
| 168 | 123 | 130 | 129 | 133 | 1,7 | 0,4 | 1,7 | 1,7 |
| 180 | 125 | 133 | 135 | 136 | 1,3 | 0,7 | 2,5 | 1,2 |

**Tabelle 5: Joncryl^{®} 504/B2: Pendelhärten und Erichsen-Tiefung**

| T | Pendelhärte [Schläge] | | | | Erichsen-Tiefung [mm] | | | |
|---|---|---|---|---|---|---|---|---|
| [OC] | Joncryl^{®} 504 Referenz | 9:1 | 8:2 | 7:3 | J. 504 | 9:1 | 8:2 | 7:3 |
| 80 | klebt | klebt | 1 | 10 | 10 | 10 | 10 | 10 |
| 89 | klebt | 1 | 13 | 16 | 10 | 10 | 10 | 10 |
| 100 | 17 | 22 | 49 | 77 | 10 | 10 | 9,8 | 9,9 |
| 109 | 50 | 46 | 94 | 90 | 9,4 | 9,2 | 8,4 | 9 |
| 120 | 90 | 92 | 114 | 118 | 7,4 | 7,7 | 7 | 7,7 |
| 132 | 109 | 108 | 120 | 127 | 5,5 | 6 | 4,9 | 6 |
| 143 | 115 | 118 | 122 | 129 | 3,2 | 4,6 | 3,5 | 3,1 |
| 157 | 119 | 121 | 123 | 129 | 1,9 | 2,6 | 2,7 | 2,4 |
| 168 | 123 | 136 | 125 | 139 | 1,7 | 1,7 | 1,2 | 1,2 |
| 180 | 125 | 131 | 129 | 143 | 1,3 | 1,8 | 0,9 | 1,3 |

**Tabelle 6: Joncryl^{®} 504/B3: Pendelhärten und Erichsen-Tiefung**

| T | Pendelhärte [Schläge] | | | | Erichsen-Tiefung [mm] | | | |
|---|---|---|---|---|---|---|---|---|
| [OC] | Joncryl^{®} 504 Referenz | 9:1 | 8:2 | 7:3 | J. 504 | 9:1 | 8:2 | 7:3 |
| 80 | klebt | klebt | 1 | 2 | 10 | 10 | 10 | 10 |
| 89 | klebt | 2 | 11 | 14 | 10 | 10 | 10 | 10 |
| 100 | 17 | 20 | 30 | 43 | 10 | 10 | 9,6 | 9,7 |
| 109 | 50 | 51 | 69 | 85 | 9,4 | 8,9 | 8,8 | 8,7 |
| 120 | 90 | 98 | 100 | 117 | 7,4 | 7,1 | 7,5 | 7,3 |
| 132 | 109 | 113 | 109 | 125 | 5,5 | 5,5 | 5,6 | 5,6 |
| 143 | 115 | 118 | 116 | 128 | 3,2 | 3,5 | 4 | 4,1 |
| 157 | 119 | 123 | 121 | 131 | 1,9 | 2,2 | 1,9 | 2,2 |
| 168 | 123 | 126 | 127 | 134 | 1,7 | 1,7 | 1,7 | 1,4 |
| 180 | 125 | 128 | 129 | 140 | 1,3 | 1,7 | 1,5 | 1,3 |

**Tabelle 7: Joncryl^{®} 504/B4: Pendelhärten und Erichsen-Tiefung**

| T | Pendelhärte [Schläge] | | | | Erichsen-Tiefung [mm] | | | |
|---|---|---|---|---|---|---|---|---|
| [OC] | Joncryl^{®} 504 Referenz | 9:1 | 8:2 | 7:3 | J. 504 | 9:1 | 8:2 | 7:3 |
| 80 | klebt | klebt | klebt | klebt | 10 | 10 | 10 | 10 |
| 89 | klebt | klebt | klebt | 3 | 10 | 10 | 10 | 10 |
| 100 | 17 | 17 | 19 | 25 | 10 | 10 | 10 | 10 |
| 109 | 50 | 53 | 56 | 61 | 9,4 | 9,3 | 9,9 | 9,6 |
| 120 | 90 | 95 | 96 | 103 | 7,4 | 7,3 | 8,2 | 8 |
| 132 | 109 | 110 | 104 | 107 | 5,5 | 5,9 | 7,2 | 6,6 |
| 143 | 115 | 119 | 120 | 122 | 3,2 | 3,3 | 4,4 | 4,3 |
| 157 | 119 | 123 | 122 | 126 | 1,9 | 2,6 | 3,4 | 2,4 |
| 168 | 123 | 126 | 127 | 128 | 1,7 | 1,7 | 2,1 | 2,2 |
| 180 | 125 | 129 | 134 | 135 | 1,3 | 2,6 | 1,5 | 2,5 |

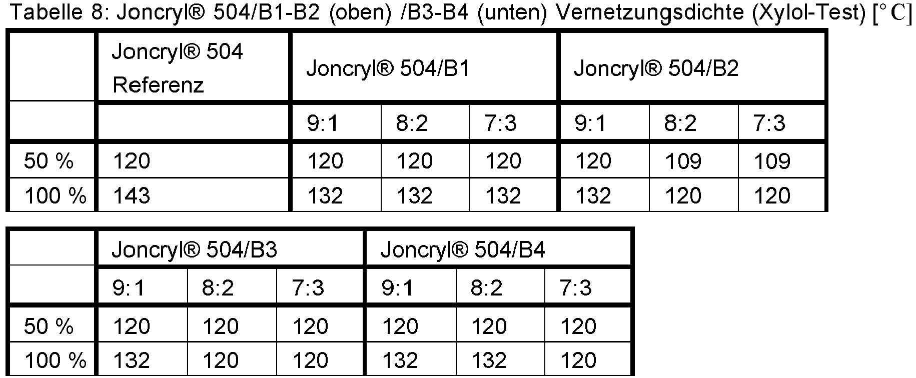

### Versuchsreihe 3: Chemikalienbeständigkeit für Automobile mit Joncryl^{®} 504

Vergleich von Mischungen von Polyacrylatol / erfindungsgemäßem Polyesterpolyol B3 gegenüber Polyacrylatol Joncryl^{®} 504 ohne Polyesterpolyol in der Chemikalienbeständigkeit. Die Lacke wurden für 20 Minuten bei 140 °C und 16-24 h bei (23 ± 2) °C und (50 ± 10) % Luftfeuchte gehärtet.

Je mehr Polyesterpolyol eingesetzt wurde desto besser sind die Beständigkeiten. In der Schwefelsäurebeständigkeit ist die 8:2-Mischung schlechter, beim Pankreatin und Baumharz gleich und bei 5% Natronlauge um 3 °C besser als die Referenz, im Mittel also vergleichbar. Die 7:3-Mischung ist bei der Schwefelsäure entsprechend der Referenz, ansonsten sind die Beständigkeiten um 9 bis 20 °C deutlich besser als die Referenz.

**Tabelle 9: Chemikalienbeständikeiten für Automobile (°C)**

| | 1 % H2SO4 | 5 % NaOH | Pankreatin | Baumharz |
|---|---|---|---|---|
| Joncryl^{®} 504, Referenz | 45 | 55 | 50 | 30 |
| Joncryl^{®} 504 / B3 = 8:2 | 42 | 58 | 50 | 30 |
| Joncryl^{®} 504 / B3 = 7:3 | 45 | 64 | 63 | 50 |

### Versuchsreihe 4:

Vergleich von Mischungen von Polyesterpolyol / erfindungsgemäßen Polyesterpolyolen B1, B3, B4 gegenüber Polyesterpolyol ohne erfindungsgemäße Polyesterpolyole in einer Coil Coating-Anwendung in einem System Polyol/Luwipal^{®} 066 LF = 4,4:1 fest/fest. Luwipal^{®} 066 LF ist ein Aminoharz welches typischerweise in Coil Coating-Lacken Anwendung findet. Die Mischungsverhältnisse Polyesterpolyol / erfindungsgemäßem Polyesterpolyol betrugen 7:3fest/fest. Filme wurden auf 50 µm nass mit einem Spiralrakel appliziert. Es wurde 30 Sekunden in einem Coil-Ofen bei 300 °C gehärtet (Peak Metal Temperatur 260 °C), und nachfolgend 16-24 h bei (23 ± 2) °C und (50 ± 10) % Luftfeuchte gelagert. Die Trockenschichtdicke betrug 20-22 µm.

Die Vernetzungsdichte (MEK-Doppelhübe) ist bei den erfindungsgemäßen Mischungen besser, die Bleistifthärte höher, die Erichsen-Tiefung etwas niedriger, Impact und re-impact identisch. In der Summe findet also durch die Zugabe der erfindungsgemäßen Polyesterpolyole eine Verbesserung der Lackeigenschaften statt.

**Tabelle 10: Harzzusammensetzunen und Erebnisse der Coil-Coating Applikation**

| Rohstoffe | nfA [%] | Referenz | B1 | B3 | B4 |
|---|---|---|---|---|---|
| Dynapol^{®} LH 832-02 | 60 | 78,9 | 55,2 | 55,2 | 55,2 |
| Luwipal^{®} 066 LF | 95,6 | 10,3 | 10,3 | 10,3 | 10,3 |
| B1 | 75 | | 19,0 | | |
| B3 | 70 | | | 20,3 | |
| B4 | 75 | | | | 19 |
| Nacure^{®} 2558 | | 0,2 | 0,2 | 0,2 | 0,2 |
| Butylglykol | | 2,7 | 2,7 | 2,7 | 2,7 |
| Solvesso^{®} 150 | | 7,9 | 7,9 | 7,9 | 7,9 |
| MEK [Doppelhübe] | | <150 | >200 | >200 | >200 |
| Impact (4 pound) [inchpound] | | 160 | 160 | 160 | 160 |
| Re-Impact (4 pound) [inchpound] | | 160 | 160 | 160 | 160 |
| Erichsen [mm] | | 8,2 | 7,7 | 7,2 | 7,4 |
| Bleistifthärte | | 2H | 3H | 3H | 3H |

## Patentansprüche

1. Einkomponentige, lösungsmittelhaltige Aminoharzbeschichtungsmassen enthaltend als Aufbaukomponenten
(A) mindestens ein Aminoharz, ausgewählt aus der Gruppe bestehend aus Melamin-Formaldehydharz, Benzoguanamin-Formaldehydharz und Harnstoff-Formaldehydharz,
(B) mindestens ein hydroxylgruppenhaltiges Polymer ausgewählt aus der Gruppe bestehend aus Poly(meth)acrylatpolyolen (B1), Polyesterpolyolen (B2) die durch Kondensation von Polycarbonsäuren mit Diolen erhältlich sind, Polyetherolen (B3), Alkydharzen (B4) und Polycarbonatpolyolen (B5),
(C) mindestens ein verzweigtes Polyesterpolyol, erhältlich durch Polykondensation von
- Hexahydrophthalsäureanhydrid,
- Trimethylolpropan,
- optional mindestens eines Diols, wobei das molare Mischungsverhältnis von Hydroxylgruppen des Trimethylpropans zu den Hydroxylgruppen der Summe aller Diole oberhalb von 1:1 liegt,
- optional mindestens eines weiteren Triols,
- optional mindestens einer weiteren Di- oder Tri-Säure oder deren Derivaten,
wobei die Säure- und Hydroxylgruppen der Rohstoffe des Polyesterpolyols in einem molaren Mischungsverhältnis von 1:1 bis 1:1,95, bevorzugt von 1:1,2 bis 1:1,8 eingesetzt werden, und
im Polyesterpolyol weniger als 20 %, bevorzugt weniger als 10 %, besonders bevorzugt kein Tetraalkohol stöchiometrisch bezogen auf Hexahydrophthalsäureanhydrid eingesetzt wird und
wobei das Polyesterpolyol nicht aus Dihydroxycarbonsäuren gebildet ist,
(D) optional mindestens einen chemischen Vernetzer, ausgewählt aus der Gruppe bestehend aus blockierten Polyisocyanaten, Trisalkylcarbamoyltriazinen, Epoxidharzen, carboxygruppenhaltigen Harzen und von Aminoharz (A) verschiedenen aminogruppenhaltigen Harzen,
(E) mindestens ein organisches Lösungsmittel,
(F) optional mindestens einen Katalysator,
(G) optional mindestens ein lacktypisches Additiv,
(H) optional mindestens einen Füllstoff, Farbstoff und/oder Pigment,
wobei das Verhältnis der Komponenten (B) zu (C) größer als 1:1 bezogen auf Feststoff beträgt, und wobei das Polyesterpolyol (C) eine Summe von Säurezahl gemäß DIN EN ISO 2114:2000 und Hydroxylzahl gemäß DIN 53240-2:2007-11 von 200 bis 400 mg KOH/g aufweist.

2. Beschichtungsmasse gemäß Anspruch 1, **dadurch gekennzeichnet, dass** das Aminoharz (A) ein teilweise verethertes Melamin-Formaldehyd-Harz ist, welches ein Einbaumolverhältnis Melamin:Formaldehyd:Alkohol von 1 : 3 bis 5,4 : 1,5 bis 4,3 aufweist.

3. Beschichtungsmasse gemäß Anspruch 1, **dadurch gekennzeichnet, dass** das Aminoharz (A) ein vollständig bis hoch methyloliertes und vollalkyliertes bis hochalkyliertes Melaminformaldehydharz ist, bei denen das Einbaumolverhältnis Melamin:Formaldehyd:Alkohol 1: größer 5,5: größer 4,5 beträgt.

4. Beschichtungsmasse gemäß einem der vorstehenden Ansprüche, **dadurch gekennzeichnet, dass** das hydroxylgruppenhaltige Polymer (B) ein Poly(meth)acrylatpolyol (B1) ist mit einem zahlenmittleren Molekulargewicht Mₙ von 500 bis 50.000 D, bevorzugt von 800 bis 5.000 D, besonders bevorzugt von 1.000 bis 2.000 D, gemessen mit Gelpermeationschromatographie mit Polmethylmethacrylat als Standard und Tetrahydrofuran als Elutionsmittel.

5. Beschichtungsmasse gemäß einem der vorstehenden Ansprüche, **dadurch gekennzeichnet, dass** das Polymer (B) und das verzweigte Polyesterpolyol (C) in einem Gewichtsverhältnis von 1,1:1 bis 49:1, bevorzugt von 1,5:1 bis 19:1, besonders bevorzugt von 2,3:1 bis 9:1 bezogen auf Feststoff eingesetzt werden.

6. Beschichtungsmasse gemäß einem der vorstehenden Ansprüche, **dadurch gekennzeichnet, dass** das Polyesterpolyol (C) Hydroxylzahlen von 130 bis 280 mg KOH/g bezogen auf Feststoff aufweist und/oder das Polyesterpolyol (C) Säurezahlen von 8 bis 110, bevorzugt von 33 bis 100 gemäß DIN EN ISO 2114:2000 bezogen auf Feststoff aufweist.

7. Beschichtungsmasse gemäß einem der vorstehenden Ansprüche, **dadurch gekennzeichnet, dass** das Polyesterpolyol (C) ausschließlich aus Hexahydrophthalsäureanhydrid und Trimethylolpropan in einem molaren Mischungsverhältnis von Säuregruppen zu Hydroxylgruppen von 1:1,1 bis 1:1,6 hergestellt wird.

8. Beschichtungsmasse gemäß einem der vorstehenden Ansprüche, **dadurch gekennzeichnet, dass** das Polyesterpolyol (C) neben Hexahydrophthalsäureanhydrid nicht unter Verwendung einer weiteren Di- oder Trisäure oder deren Derivate hergestellt wird.

9. Beschichtungsmasse gemäß einem der Ansprüche 1 bis 6, **dadurch gekennzeichnet, dass** das Polyesterpolyol (C) gebildet ist ausschließlich aus Hexahydrophthalsäureanhydrid, Trimethylolpropan und Diolen ausgewählt aus der Gruppe bestehend aus den Isomeren oder Isomerengemischen von Tricyclodecandimethanol, Tetrahydro-2,5-bis-(hydroxymethyl)-furan, 1,6-Hexandiol, Neopentylglykol und 2-Butyl-2-ethyl-1,3-propandiol.

10. Beschichtungsmasse gemäß dem vorhergehenden Anspruch, **dadurch gekennzeichnet, dass** das molare Verhältnis der Hydroxylgruppen von Trimethylolpropan zu den Hydroxylgruppen der Diole von 1,1:1 bis 3:1 beträgt.

11. Beschichtungsmasse gemäß einem der vorstehenden Ansprüche, **dadurch gekennzeichnet, dass** das Polyesterpolyol (C) Zinn-frei ist und/oder unkatalysiert oder mit einem Zink, Titan, Zirkon, Bismut oder einem anderen nicht Zinn enthaltenden Katalysator, bevorzugt einem Titan enthaltenden Katalysator hergestellt ist und/oder dass das Polyesterpolyol (C) in Abwesenheit von Lösungsmittel hergestellt wird.

12. Beschichtungsmasse gemäß einem der vorstehenden Ansprüche, **dadurch gekennzeichnet, dass** das Polyesterpolyol (C) ein zahlenmittleres Molekulargewicht Mn von 500 bis 4000, bevorzugt von 700 bis 2500, insbesondere bevorzugt von 950 bis 2.000 g/mol und/oder eine Polydispersität von kleiner oder gleich 5, bevorzugt kleiner 3,5 aufweist, gemessen mit Gelpermeationschromatographie mit Polmethylmethacrylat als Standard und Tetrahydrofuran als Elutionsmittel.

13. Beschichtungsmasse gemäß einem der vorstehenden Ansprüche, **dadurch gekennzeichnet, dass** das Polyesterpolyol (C) eine Glasübergangstemperatur von -20 bis 50 °C, bevorzugt von -15 bis 50 °C aufweist.

14. Beschichtungsmasse gemäß einem der vorstehenden Ansprüche, **dadurch gekennzeichnet, dass** das Polyesterpolyol (C) in einem einstufigen Prozess hergestellt wird.

15. Beschichtungsmasse gemäß einem der vorstehenden Ansprüche, **dadurch gekennzeichnet, dass** es die Aufbaukomponenten in folgenden Mengen enthält
(A) 100 Gew.-Teile der Aminoharze (bezogen auf Festanteil)
(B) von 45 bis 882 Gew.-Teile, vorzugsweise 70 bis 810 Gew.-Teile der hydroxylgruppenhaltigen Polymere (je bezogen auf Festanteile)
(C) von 2 bis 450 Gew.-Teile, vorzugsweise 10 bis 270 Gew.-Teile der verzweigten Polyesterpolyole (je bezogen auf Festanteile)
(D) optional chemische Vernetzer
(E) von 0 bis 80 Gew.%, vorzugsweise von 20 bis 70 Gew % organische Lösungsmittel bezogen auf die Summe der Mengen von (A) bis (G)
(F) von 0 bis 10 Gew.-Teile, bevorzugt von 0,1 bis 8 Gew.-Teile Katalysator, bezogen auf das eingesetzte Aminoharz (A) (fest auf fest)
(G) optional lacktypische Additive
(H) optional Füllstoffe, Farbstoffe und/oder Pigmente.

16. Verfahren zum Beschichten von Substraten, **dadurch gekennzeichnet, dass** man Aminoharz (A) und Polymer (B) und Polyesterpolyol (C), wie in einem der vorstehenden Ansprüche definiert, in einem Gewichtsverhältnis von (A) gegenüber der Summe von (B) und (C) von vorzugsweise 1:1 bis 1:9 miteinander vermischt, wobei optional noch weitere Komponenten (D) bis (H) eingemischt werden können, und man anschließend auf das Substrat aufträgt.

17. Verwendung von Beschichtungsmassen gemäß einem der Ansprüche 1 bis 15 zum Beschichten von Gebäudeteilen, Fahrzeugen oder Flugzeugen, für Can-Coating, für Coil-Coating oder für Dekolackierungen.

18. Verwendung von Beschichtungsmassen gemäß einem der Ansprüche 1 bis 15 zum Beschichten von Substraten ausgewählt aus Holz, Holzfurnier, Papier, Pappe, Karton, Textil, Folie, Leder, Vlies, Kunststoffoberflächen, Glas, Keramik, Metallen und mineralischen Baustoffen, wie Zement-Formsteine oder Faserzementplatten, wobei die Substrate jeweils optional vorbeschichtet oder vorbehandelt sein können.

19. Substrat, beschichtet mit einer Beschichtungsmasse gemäß einem der Ansprüche 1 bis 15.

## Claims

1. A one-component, solvent-containing amino resin coating composition comprising as synthesis components
(A) at least one amino resin, selected from the group consisting of melamine-formaldehyde resin, benzoguanamine-formaldehyde resin, and ureaformaldehyde resin,
(B) at least one hydroxyl-containing polymer selected from the group consisting of poly(meth)acrylate polyols (B1), polyester polyols (B2) obtainable by condensation of polycarboxylic acids with diols, polyetherols (B3), alkyd resins (B4), and polycarbonate polyols (B5),
(C) at least one branched polyester polyol, obtainable by polycondensation of
- hexahydrophthalic anhydride,
- trimethylolpropane,
- optionally at least one diol, the molar mixing ratio of hydroxyl groups of the trimethylolpropane to the hydroxyl groups of the sum total of all diols being greater than 1:1,
- optionally at least one further triol,
- optionally at least one further diacid or triacid or derivatives thereof,
the acid groups and hydroxyl groups of the raw materials for the polyester polyol being used in a molar mixing ratio of 1:1 to 1:1.95, preferably of 1:1.2 to 1:1.8, and there being used in the polyester polyol less than 20%, preferably less than 10%, more preferably no tetraalcohol stoichiometrically relative to hexahydrophthalic anhydride, and
the polyester polyol not being formed from dihydroxycarboxylic acids,
(D) optionally at least one chemical crosslinker, selected from the group consisting of blocked polyisocyanates, trisalkylcarbamoyltriazines, epoxy resins, carboxyl-containing resins, and amino-containing resins other than amino resin (A),
(E) at least one organic solvent,
(F) optionally at least one catalyst,
(G) optionally at least one typical coatings additive,
(H) optionally at least one filler, dye and/or pigment, the ratio of components (B) to (C) being greater than 1:1, based on solids, and the polyester polyol (C) having a sum total of acid number according to DIN EN ISO 2114:2000 and hydroxyl number according to DIN 53240-2:2007-11 of 200 to 400 mg KOH/g.

2. The coating composition according to claim 1, wherein the amino resin (A) is a partly etherified melamine-formaldehyde resin which has a molar melamine: formaldehyde: alcohol incorporation ratio of 1:3 to 5.4:1.5 to 4.3.

3. The coating composition according to claim 1, wherein the amino resin (A) is a fully to highly methylolated and fully alkylated to highly alkylated melamine-formaldehyde resin in which the molar melamine: formaldehyde: alcohol incorporation ratio is 1:greater than 5.5:greater than 4.5.

4. The coating composition according to any of the preceding claims, wherein the hydroxyl-containing polymer (B) is a poly(meth)acrylate polyol (B1) having a number-average molecular weight Mₙ of 500 to 50 000 D, preferably of 800 to 5000 D, more preferably of 1000 to 2000 D, measured by gel permeation chromatography with polymethyl methacrylate as standard and tetrahydrofuran as eluent.

5. The coating composition according to any of the preceding claims, wherein the polymer (B) and the branched polyester polyol (C) are used in a weight ratio of 1.1:1 to 49:1, preferably of 1.5:1 to 19:1, more preferably of 2.3:1 to 9:1, based on solids.

6. The coating composition according to any of the preceding claims, wherein the polyester polyol (C) has hydroxyl numbers of 130 to 280 mg KOH/g based on solids and/or the polyester polyol (C) has acid numbers of 8 to 110, preferably of 33 to 100, according to DIN EN ISO 2114:2000, based on solids.

7. The coating composition according to any of the preceding claims, wherein the polyester polyol (C) is prepared exclusively from hexahydrophthalic anhydride and trimethylolpropane in a molar mixing ratio of acid groups to hydroxyl groups of 1:1.1 to 1:1.6.

8. The coating composition according to any of the preceding claims, wherein the polyester polyol (C) is prepared not using, apart from hexahydrophthalic anhydride, any further diacid or triacid or derivatives thereof.

9. The coating composition according to any of claims 1 to 6, wherein the polyester polyol (C) is formed exclusively from hexahydrophthalic anhydride, trimethylolpropane, and diols selected from the group consisting of the isomers or isomer mixtures of tricyclodecanedimethanol, tetrahydro-2,5-bis(hydroxymethyl)furan, 1,6-hexanediol, neopentyl glycol, and 2-butyl-2-ethyl-1,3-propanediol.

10. The coating composition according to the preceding claim, wherein the molar ratio of the hydroxyl groups of trimethylolpropane to the hydroxyl groups of the diols is from 1.1:1 to 3:1.

11. The coating composition according to any of the preceding claims, wherein the polyester polyol (C) is tin-free and/or is prepared uncatalyzed or with a catalyst comprising zinc, titanium, zirconium, or bismuth, or with another catalyst not comprising tin, preferably with a catalyst comprising titanium, and/or wherein the polyester polyol (C) is prepared in the absence of solvent.

12. The coating composition according to any of the preceding claims, wherein the polyester polyol (C) has a number-average molecular weight Mn of 500 to 4000, preferably of 700 to 2500, especially preferably of 950 to 2000 g/mol and/or has a polydispersity of less than or equal to 5, preferably less than 3.5, measured by gel permeation chromatography with polymethyl methacrylate as standard and tetrahydrofuran as eluent.

13. The coating composition according to any of the preceding claims, wherein the polyester polyol (C) has a glass transition temperature of -20 to 50°C, preferably of -15 to 50°C.

14. The coating composition according to any of the preceding claims, wherein the polyester polyol (C) is prepared in a one-stage procedure.

15. The coating composition according to any of the preceding claims, which comprises the synthesis components in the following amounts:
(A) 100 parts by weight of the amino resins (based on solid fraction)
(B) from 45 to 882 parts by weight, preferably 70 to 810 parts by weight, of the hydroxyl-containing polymers (in each case based on solid fractions)
(C) from 2 to 450 parts by weight, preferably 10 to 270 parts by weight, of the branched polyester polyols (in each case based on solid fractions)
(D) optionally chemical crosslinkers
(E) from 0 to 80 wt%, preferably from 20 to 70 wt%, of organic solvents, based on the sum total of the amounts of (A) to (G)
(F) from 0 to 10 parts by weight, preferably from 0.1 to 8 parts by weight, of catalyst, based on the amino resin (A) used (solid on solid)
(G) optionally typical coatings additives
(H) optionally fillers, dyes and/or pigments.

16. A method for coating a substrate, which comprises mixing amino resin (A) and polymer (B) and polyester polyol (C) as defined in any of the preceding claims with one another in a weight ratio of (A) relative to the sum total of (B) and (C) of preferably 1:1 to 1:9, where optionally further components (D) to (H) can be mixed in, and subsequently applying the mixture to the substrate.

17. The use of the coating composition according to any of claims 1 to 15 for coating parts of buildings, for coating vehicles or aircraft, for can coating, for coil coating, or for decorative coating systems.

18. The use of the coating composition according to any of claims 1 to 15 for coating a substrate selected from wood, wood veneer, paper, paperboard, cardboard, textile, film, leather, nonwoven, plastics surfaces, glass, ceramic, metals, and mineral building materials, such as molded cement blocks or fiber cement slabs, it being possible for the substrates in each case to have been optionally precoated or pretreated.

19. A substrate coated with a coating composition according to any of claims 1 to 15.

## Revendications

1. Masses de revêtement à base de résine amino, à un composant, contenant du solvant, contenant, comme composants constitutifs
(A) au moins une résine amino, choisie dans le groupe constitué par la résine de mélamine-formaldéhyde, la résine de benzoguanamine-formaldéhyde et la résine d'urée-formaldéhyde,
(B) au moins un polymère contenant des groupes hydroxyle, choisi dans le groupe constitué par les poly(méth)acrylate-polyols (B1), les polyesterpolyols (B2) qui peuvent être obtenus par condensation de poly(acides carboxyliques) avec des diols, les polyétherols (B3), les résines alkyde (B4) et les polycarbonatepolyols (B5),
(C) au moins un polyesterpolyol ramifié, pouvant être obtenu par polycondensation
- d'anhydride de l'acide hexahydrophtalique,
- de triméthylolpropane,
- éventuellement d'au moins un diol, le rapport molaire de mélange des groupes hydroxyle du triméthylpropane aux groupes hydroxyle de la somme de tous les diols étant supérieur à 1:1,
- éventuellement d'au moins un autre triol,
- éventuellement d'au moins un autre diacide ou triacide ou de leurs dérivés,
les groupes acides et hydroxyle des matières premières du polyesterpolyol étant utilisés dans un rapport de mélange molaire de 1:1 à 1:1,95, de préférence de 1:1,2 à 1:1,8 et
dans le polyesterpolyol, on utilise moins de 20%, de préférence moins de 10%, de manière particulièrement préférée on n'utilise pas de tétra-alcool, stoechiométriquement par rapport à l'anhydride de l'acide hexahydrophtalique et
le polyesterpolyol n'étant pas formé à partir d'acides dihydroxycarboxyliques,
(D) éventuellement au moins un réticulant chimique, choisi dans le groupe constitué par les polyisocyanates bloqués, les trisalkylcarbamoyltriazines, les résines époxyde, les résines contenant des groupes carboxy et les résines contenant des groupes amino différentes de la résine amino (A),
(E) au moins un solvant organique,
(F) éventuellement au moins un catalyseur,
(G) éventuellement au moins un additif caractéristique des vernis,
(H) éventuellement au moins une charge, un colorant et/ou un pigment,
le rapport des composants (B) à (C) étant supérieur à 1:1 par rapport au solide et le polyesterpolyol (C) présentant une somme d'indice d'acide selon la norme DIN EN ISO 2114:2000 et d'indice d'hydroxyle selon la norme DIN 53240-2:2007-11 de 200 à 400 mg de KOH/g.

2. Masse de revêtement selon la revendication 1, **caractérisée en ce que** la résine amino (A) est une résine de mélamine-formaldéhyde partiellement éthérifiée, qui présente un rapport molaire d'incorporation mélamine:formaldéhyde:alcool de 1:3 à 5,4:1,5 à 4,3.

3. Masse de revêtement selon la revendication 1, **caractérisée en ce que** la résine amino (A) est une résine de mélamine-formaldéhyde complètement à hautement méthylolée et complètement à hautement alkylée, dans laquelle le rapport molaire d'incorporation mélamine:formaldéhyde:alcool est de 1:supérieur à 5,5:supérieur à 4,5.

4. Masse de revêtement selon l'une quelconque des revendications précédentes, **caractérisée en ce que** le polymère contenant des groupes hydroxyle (B) est un poly(méth)acrylate-polyol (B1) présentant un poids moléculaire moyen en nombre Mₙ de 500 à 50.000 D, de préférence de 800 à 5000 D, de manière particulièrement préférée de 1000 à 2000 D, mesuré par chromatographie par perméation de gel à l'aide de poly(méthacrylate de méthyle) comme standard et de tétrahydrofuranne comme éluant.

5. Masse de revêtement selon l'une quelconque des revendications précédentes, **caractérisée en ce que** le polymère (B) et le polyesterpolyol ramifié (C) sont utilisés dans un rapport pondéral de 1,1:1 à 49:1, de préférence de 1,5:1 à 19:1, de manière particulièrement préférée de 2,3:1 à 9:1 par rapport au solide.

6. Masse de revêtement selon l'une quelconque des revendications précédentes, **caractérisée en ce que** le polyesterpolyol (C) présente des indices d'hydroxyle de 130 à 280 mg de KOH/g par rapport au solide et/ou le polyesterpolyol (C) présente des indices d'acide de 8 à 110, de préférence de 33 à 100 selon la norme DIN EN ISO 2114:2000 par rapport au solide.

7. Masse de revêtement selon l'une quelconque des revendications précédentes, **caractérisée en ce que** le polyesterpolyol (C) est préparé exclusivement à partir d'anhydride de l'acide hexahydrophtalique et de triméthylolpropane dans un rapport de mélange molaire de groupes acides à groupes hydroxyle de 1:1,1 à 1:1,6.

8. Masse de revêtement selon l'une quelconque des revendications précédentes, **caractérisée en ce que** le polyesterpolyol (C) n'est préparé, outre à partir de l'anhydride de l'acide hexahydrophtalique, à partir d'aucun autre diacide ou triacide ou leurs dérivés.

9. Masse de revêtement selon l'une quelconque des revendications 1 à 6, **caractérisée en ce que** le polyesterpolyol (C) est formé exclusivement à partir d'anhydride de l'acide hexahydrophtalique, de triméthylolpropane et de diols choisis dans le groupe constitué par les isomères ou mélanges d'isomères du tricyclodécanediméthanol, du tétrahydro-2,5-bis-(hydroxyméthyl)-furanne, du 1,6-hexanediol, du néopentylglycol et du 2-butyl-2-éthyl-1,3-propanediol.

10. Masse de revêtement selon la revendication précédente, **caractérisée en ce que** le rapport molaire des groupes hydroxyle du triméthylolpropane aux groupes hydroxyle des diols est de 1,1:1 à 3:1.

11. Masse de revêtement selon l'une quelconque des revendications précédentes, **caractérisée en ce que** le polyesterpolyol (C) est exempt d'étain et/ou est préparé de manière non catalysée ou avec un catalyseur contenant du zinc, du titane, du zirconium, du bismuth ou un autre catalyseur ne contenant pas d'étain, de préférence un catalyseur contenant du titane et/ou **en ce que** le polyesterpolyol (C) est préparé en l'absence de solvant.

12. Masse de revêtement selon l'une quelconque des revendications précédentes, **caractérisée en ce que** le polyesterpolyol (C) présente un poids moléculaire moyen en nombre Mₙ de 500 à 4000, de préférence de 700 à 2500, en particulier de préférence de 950 à 2000 g/mole et/ou une polydispersité inférieure ou égale à 5, de préférence inférieure à 3,5, mesurés par chromatographie par perméation de gel à l'aide de poly(méthacrylate de méthyle) comme standard et de tétrahydrofuranne comme éluant.

13. Masse de revêtement selon l'une quelconque des revendications précédentes, **caractérisée en ce que** le polyesterpolyol (C) présente une température de transition vitreuse de -20 à 50°C, de préférence de -15 à 50°C.

14. Masse de revêtement selon l'une quelconque des revendications précédentes, **caractérisée en ce que** le polyesterpolyol (C) est préparé dans un procédé à une étape.

15. Masse de revêtement selon l'une quelconque des revendications précédentes, **caractérisée en ce qu'**elle contient les composants constitutifs dans les quantités suivantes
(A) 100 parties en poids des résines amino (par rapport à la proportion de solide)
(B) 45 à 882 parties en poids, de préférence 70 à 810 parties en poids des polymères contenant des groupes hydroxyle (à chaque fois par rapport aux proportions de solide)
(C) 2 à 450 parties en poids, de préférence 10 à 270 parties en poids des polyesterpolyols ramifiés (à chaque fois par rapport aux proportions de solide)
(D) éventuellement un réticulant chimique
(E) 0 à 80% en poids, de préférence 20 à 70% en poids de solvant organique, par rapport à la somme des quantités de (A) à (G)
(F) 0 à 10 parties en poids, de préférence 0,1 à 8 parties en poids de catalyseur, par rapport à la résine amino (A) utilisée (solide sur solide)
(G) éventuellement des additifs caractéristiques des vernis
(H) éventuellement des charges, des colorants et/ou des pigments.

16. Procédé pour le revêtement de substrats, **caractérisé en ce qu'**on mélange, les uns avec les autres, une résine amino (A) et un polymère (B) et un polyesterpolyol (C), tels que définis dans l'une quelconque des revendications précédentes, dans un rapport pondéral de (A) à la somme de (B) et de (C) de préférence de 1:1 à 1:9, d'autres composants (D) à (H) pouvant le cas échéant encore être mélangés, puis on applique sur le substrat.

17. Utilisation de masses de revêtement selon l'une quelconque des revendications 1 à 15 pour le revêtement de parties de bâtiment, de véhicules ou d'avions, pour le revêtement de boîtes, pour le revêtement de bobines ou pour les vernis décoratifs.

18. Utilisation de masses de revêtement selon l'une quelconque des revendications 1 à 15 pour le revêtement de substrats choisis parmi le bois, le placage en bois, le papier, le carton-pâte, le carton, le textile, les feuilles, le cuir, le non-tissé, les surfaces en matériau synthétique, le verre, la céramique, les métaux et les matériaux de construction minéraux, tels que les briques de ciment ou les plaques de fibre-ciment, les substrats pouvant à chaque fois éventuellement être revêtus ou traités au préalable.

19. Substrat, revêtu par une masse de revêtement selon l'une quelconque des revendications 1 à 15.
